# EUROPEAN PATENT SPECIFICATION

(11) **EP 4 343 402 B1**
(45) Date of publication and mention of the grant of the patent: **14.10.2026**
(21) Application number: 22831855.6
(22) Date of filing: 23.06.2022
(51) Int. Cl.: G02B 13/24, G02B 13/18, G02B 13/00, G02B 9/34, G02B 9/60, G03B 30/00, G02B 15/00, G02B 15/14, G02B 15/20

(54) **ZOOM LENS, CAMERA MODULE, AND MOBILE TERMINAL**
ZOOMOBJEKTIV, KAMERAMODUL UND MOBILES ENDGERÄT
OBJECTIF À FOCALE VARIABLE, MODULE DE CAMÉRA ET TERMINAL MOBILE

(30) Priority: 30.06.2021 CN 202110738449
(43) Date of publication of application: 27.03.2024
(73) Proprietor: Huawei Technologies Co., Ltd., Shenzhen, Guangdong 518129 (CN)
(72) Inventor: ZHANG, Kaiyuan, Shenzhen, Guangdong 518129 (CN); XIAO, Liuchang, Shenzhen, Guangdong 518129 (CN); FENG, Rongkai, Shenzhen, Guangdong 518129 (CN)
(74) Representative: Gill Jennings & Every LLP
(86) International application number: PCT/CN2022/100934
(87) International publication number: WO 2023/274041

(56) References cited:
- CN-A- 101 236 294
- CN-A- 114 384 668
- CN-U- 216 210 162
- JP-A- 2004 240 074
- JP-A- 2015 163 927
- JP-A- 2015 163 927
- US-A1- 2018 196 168

## Description

### CROSS-REFERENCE TO RELATED APPLICATIONS

This application claims priority to Chinese Patent Application No. 202110738449.8, filed with the China National Intellectual Property Administration on June 30, 2021 and entitled "ZOOM LENS, CAMERA MODULE, AND MOBILE TERMINAL".

### TECHNICAL FIELD

This application relates to the field of camera technologies, and in particular, to a zoom lens, a camera module, and a mobile terminal.

### BACKGROUND

At present, as one of important means for obtaining information, cameras have been widely used in portable devices such as mobile phones and tablets. Further, as people have increasingly diversified and complex requirements on cameras in photographing scenarios, the cameras need to provide high-quality photographing effects in different scenarios. In a lens for photography, a telephoto lens (with a longer focal length) can be used to photograph a distant object, and ensure good imaging quality while providing a high magnification. However, when a user uses a telephoto lens to photograph a macro closeup scene, for example, to photograph a scene of food, a book, a doll, or an insect, an existing commercial telephoto lens has a poor capability and cannot satisfy a requirement of the user on photographing. In contrast, a macro lens can show a very strong capability in photographing a macro closeup scene, but provide an image of poor quality when used to photograph a distant scene.

To implement effects of telephotos and macro closeups, a small-sized portable device, for example, a mobile phone or a tablet, needs to have relatively much room for accommodating a camera. However, because of a size of the existing small-sized portable device, for example, the mobile phone or the tablet, there is not much room for assembling the camera, and an assembled lens cannot be used for both telephotography and macro photography.

JP2015163927A discloses an inner focus type lens system designed to be compact with high imaging performance, specifically catering to modern mirrorless digital cameras and high-speed autofocus requirements for moving images. The optical system consists of three lens groups arranged from the object side to the image side: a first group with positive refractive power, a second group with negative refractive power that moves along the optical axis for focusing, and a third group with negative refractive power. To achieve a smaller overall length and aperture while maintaining high performance from wide to standard angles of view, the system places a single negative lens component at the position closest to the image. US2018/196168A1 discloses an optical system and device.

### SUMMARY

This application provides a zoom lens, a camera module, and a mobile terminal, to improve a photographing effect of the mobile terminal.

According to a first aspect, a zoom lens is provided as set out in appended claim 1.

In a specific implementable solution, the first lens group includes at least one lens, and a lens that is in the first lens group and that is closest to the object side has a positive focal power. It is ensured that the zoom lens has a good imaging effect.

In a specific implementable solution, the lens that is in the first lens group and that is closest to the object side is a lens made of optical glass. It is ensured that the zoom lens has a good imaging effect.

In a specific implementable solution, the first lens group includes a first lens and a second lens that are arranged from the object side to the image side, and the second lens has a negative focal power. It is ensured that the zoom lens has a good imaging effect.

According to the claimed invention, in a process in which the zoom lens changes from a telephoto state to a macro state, the second lens group moves from the object side to the image side, and a ratio of a moving distance △ of the second lens group to a total track length TTL of the zoom lens satisfies △/TTL<0.4. It is ensured that the zoom lens satisfies requirements on both telephotography and macro photography with a relatively small size.

In a specific implementable solution, the moving distance △ of the second lens group is less than 4 mm. It is ensured that the zoom lens is miniaturized.

In a specific implementable solution, the second lens group includes at least one lens; and a surface, facing the image side, of a lens that is in the second lens group and that is closest to the object side is a concave surface. It is ensured that the zoom lens has a good imaging effect.

In a specific implementable solution, an aperture of the zoom lens satisfies 2.8>F#. Therefore, it is ensured that enough light can enter the zoom lens, thereby ensuring an imaging effect.

In the telephoto state, the second lens group moves to the object side, and a focusing distance ODt of the zoom lens satisfies 1 m<ODt<∞. A good telephotography effect is provided.

In the macro state, the second lens group moves to the image side, and a focusing distance Odm of the zoom lens satisfies 0.03 m<Odm<0.2 m. A good macro photography effect is provided.

In a specific implementable solution, a macro horizontal magnification of the zoom lens satisfies 0.3<β<0.7.

In a specific implementable solution, the zoom lens further includes a prism or a mirror.

The prism or the mirror is on the object side of the first lens group.

The prism or the mirror is used to reflect light to the first lens group.

According to an unclaimed second aspect, a zoom lens is provided. The zoom lens includes a first lens group and a second lens group that are arranged from an object side to an image side, where the second lens group is fixed, and the first lens group is capable of sliding along a direction of an optical axis; the first lens group has a positive focal power; the second lens group has a negative focal power; a ratio of a focal length EFLG1 of the first lens group to a focal length EFLG2 of the second lens group satisfies 0.4<|EFLG1/EFLG2|<1.22; and a ratio of the focal length EFLG2 of the second lens group to a focal length EFL of the optical lens satisfies 0.4<|EFLG2/EFL|<1. In the foregoing technical solution, a technical solution of combining two lens groups is used and is applicable to a photographing scenario of telephotography and macro photography. Compared with an existing lens that can be used for both telephotography and macro photography, a miniaturization requirement is implemented, and higher resolution and better aberration control are achieved.

In a specific implementable solution, the first lens group includes at least one lens, and a lens that is in the first lens group and that is closest to the object side has a positive focal power. It is ensured that the zoom lens has a good imaging effect.

In a specific implementable solution, the lens that is in the first lens group and that is closest to the object side is a lens made of optical glass. It is ensured that the zoom lens has a good imaging effect.

In a specific implementable solution, the first lens group includes a first lens and a second lens that are arranged from the object side to the image side, and the second lens has a negative focal power. It is ensured that the zoom lens has a good imaging effect.

In a specific implementable solution, in a process in which the zoom lens changes from a telephoto state to a macro state, the second lens group moves from the object side to the image side, and a ratio of a moving distance △ of the second lens group to a total track length TTL of the zoom lens satisfies △/TTL<0.4. It is ensured that the zoom lens satisfies requirements on both telephotography and macro photography with a relatively small size.

In a specific implementable solution, the moving distance △ of the second lens group is less than 4 mm. It is ensured that the zoom lens is miniaturized.

In a specific implementable solution, the second lens group includes at least one lens; and a surface, facing the image side, of a lens that is in the second lens group and that is closest to the object side is a concave surface. It is ensured that the zoom lens has a good imaging effect.

In a specific implementable solution, an aperture of the zoom lens satisfies 2.8>F#. Therefore, it is ensured that enough light can enter the zoom lens, thereby ensuring an imaging effect.

In a specific implementable solution, in the telephoto state, the second lens group moves to the object side, and a focusing distance ODt of the zoom lens satisfies 1 m<ODt<∞. A good telephotography effect is provided.

In a specific implementable solution, in the macro state, the second lens group moves to the image side, and a focusing distance Odm of the zoom lens satisfies 0.03 m<Odm<0.2 m. A good macro photography effect is provided.

In a specific implementable solution, a macro horizontal magnification of the zoom lens satisfies 0.3<β<0.7.

According to a third aspect, a camera module is provided. The camera module includes a photosensitive element and the zoom lens according to any one of the foregoing aspects, where the photosensitive element is on an image side of the zoom lens, the zoom lens is configured to receive light reflected by a photographed object and project the light to the photosensitive element, and the photosensitive element is configured to convert the light into an image signal. In the foregoing technical solution, a technical solution of combining two lens groups is used and is applicable to a photographing scenario of telephotography and macro photography. Compared with an existing lens that can be used for both telephotography and macro photography, a miniaturization requirement is implemented, and higher resolution and better aberration control are achieved.

According to a fourth aspect, a mobile terminal is provided. The mobile terminal includes a housing and the zoom lens according to any one of the foregoing aspects that is disposed in the housing. In the foregoing technical solution, a technical solution of combining two lens groups is used and is applicable to a photographing scenario of telephotography and macro photography. Compared with an existing lens that can be used for both telephotography and macro photography, a miniaturization requirement is implemented, and higher resolution and better aberration control are achieved.

### BRIEF DESCRIPTION OF DRAWINGS

FIG. 1 is a schematic diagram of application of a zoom lens in a conventional technology;
FIG. 2 is a schematic diagram of a structure of a zoom lens according to an embodiment of this application;
FIG. 3 is a schematic diagram of zoom of a zoom lens according to an embodiment of this application;
FIG. 4 is a schematic diagram of a structure of a first type of zoom lens according to an embodiment of this application;
FIG. 5 shows a spherical aberration of a first type of zoom lens in a telephoto state according to an embodiment of this application;
FIG. 6 shows astigmatism of a first type of zoom lens in a telephoto state according to an embodiment of this application;
FIG. 7 shows a distortion of a first type of zoom lens in a telephoto state according to an embodiment of this application;
FIG. 8 shows a spherical aberration of a first type of zoom lens in a macro state according to an embodiment of this application;
FIG. 9 shows astigmatism of a first type of zoom lens in a macro state according to an embodiment of this application;
FIG. 10 shows a distortion of a first type of zoom lens in a macro state according to an embodiment of this application;
FIG. 11 is a schematic diagram of a structure of a second type of zoom lens according to an embodiment of this application;
FIG. 12 shows a spherical aberration of a second type of zoom lens in a telephoto state according to an embodiment of this application;
FIG. 13 shows astigmatism of a second type of zoom lens in a telephoto state according to an embodiment of this application;
FIG. 14 shows a distortion of a second type of zoom lens in a telephoto state according to an embodiment of this application;
FIG. 15 shows a spherical aberration of a second type of zoom lens in a macro state according to an embodiment of this application;
FIG. 16 shows astigmatism of a second type of zoom lens in a macro state according to an embodiment of this application;
FIG. 17 shows a distortion of a second type of zoom lens in a macro state according to an embodiment of this application;
FIG. 18 is a schematic diagram of a structure of a third type of zoom lens according to an embodiment of this application;
FIG. 19 shows a spherical aberration of a third type of zoom lens in a telephoto state according to an embodiment of this application;
FIG. 20 shows astigmatism of a third type of zoom lens in a telephoto state according to an embodiment of this application;
FIG. 21 shows a distortion of a third type of zoom lens in a telephoto state according to an embodiment of this application;
FIG. 22 shows a spherical aberration of a third type of zoom lens in a macro state according to an embodiment of this application;
FIG. 23 shows astigmatism of a third type of zoom lens in a macro state according to an embodiment of this application;
FIG. 24 shows a distortion of a third type of zoom lens in a macro state according to an embodiment of this application;
FIG. 25 is a schematic diagram of a structure of a fourth type of zoom lens according to an embodiment of this application;
FIG. 26 shows a spherical aberration of a fourth type of zoom lens in a telephoto state according to an embodiment of this application;
FIG. 27 shows astigmatism of a fourth type of zoom lens in a telephoto state according to an embodiment of this application;
FIG. 28 shows a distortion of a fourth type of zoom lens in a telephoto state according to an embodiment of this application;
FIG. 29 shows a spherical aberration of a fourth type of zoom lens in a macro state according to an embodiment of this application;
FIG. 30 shows astigmatism of a fourth type of zoom lens in a macro state according to an embodiment of this application;
FIG. 31 shows a distortion of a fourth type of zoom lens in a macro state according to an embodiment of this application;
FIG. 32 is a schematic diagram of a structure of a fifth type of zoom lens according to an embodiment of this application;
FIG. 33 shows a spherical aberration of a fifth type of zoom lens in a telephoto state according to an embodiment of this application;
FIG. 34 shows astigmatism of a fifth type of zoom lens in a telephoto state according to an embodiment of this application;
FIG. 35 shows a distortion of a fifth type of zoom lens in a telephoto state according to an embodiment of this application;
FIG. 36 shows a spherical aberration of a fifth type of zoom lens in a macro state according to an embodiment of this application;
FIG. 37 shows astigmatism of a fifth type of zoom lens in a macro state according to an embodiment of this application;
FIG. 38 shows a distortion of a fifth type of zoom lens in a macro state according to an embodiment of this application;
FIG. 39 is a schematic diagram of a structure of a sixth type of zoom lens according to an embodiment of this application; and
FIG. 40 is a schematic diagram of a scenario in which a zoom lens is used in a mobile phone according to an embodiment of this application.

### DESCRIPTION OF EMBODIMENTS

Nouns are explained below.
F#: F-number, F-number/relative aperture, a ratio (a reciprocal of a relative aperture) of a focal length of a lens to an aperture diameter of the lens. A smaller F-number of an aperture indicates more light coming through per unit time. A larger F-number of the aperture indicates a smaller depth of field and a blur of a background of a photo. The effect is similar to that of a telephoto lens.
β: horizontal magnification, horizontal magnification.
EFL: effective focal length, effective focal length.
TTL: total track length, a distance from the first surface of a lens piece in a lens to an image plane, and also referred to as a total optical length.
IH: image height, a radius of an image circle, representing a half of an image height.
CCD: charge-coupler device, charge-coupler device.
CMOS: complementary metal oxide semiconductor, complementary metal oxide semiconductor.
OD: object distance, object distance, a distance from a photographed object to an optical center of a lens, and may be approximately represented by a distance from the photographed object to a front surface of the first lens.
Lens group: a group of lenses, a lens combination including several relatively fixed lenses.
Positive focal power: an effect that a lens or lens group has a positive focal length and can gather light.
Negative focal power: an effect that a lens or lens group has a negative focal length and can diverge light.
Focusing distance: a distance from an object to a vertex of the first lens piece of a lens.
Object plane: a plane on which an object to be imaged is located.
Image plane: a plane on which an image of an object is located.
Stop: an entity that restricts light in an optical system.
Object side: A side, of a zoom lens, closer to an imaged object is an object side.
Image side: A side, of a zoom lens, closer to an image of an object is an image side.
Moving distance: a distance that a moving lens group has moved in a process in which a zoom lens changes from a telephoto state to a macro state.

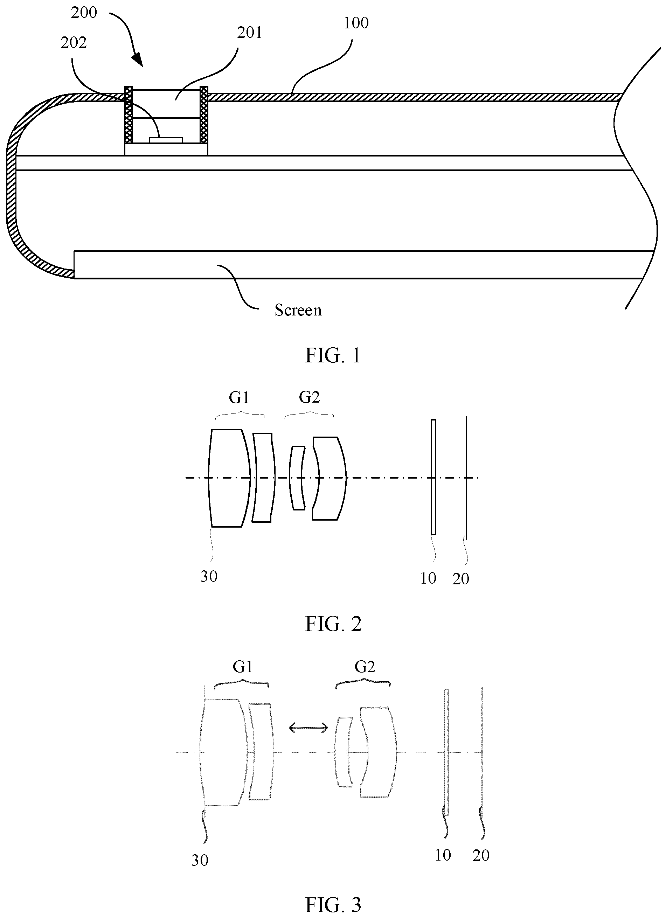

For ease of understanding a zoom lens provided in embodiments of this application, an application scenario of the zoom lens provided in embodiments of this application is first described. The zoom lens provided in embodiments of this application is used in a camera module on a mobile terminal. The mobile terminal may be a portable terminal device, for example, a mobile phone, a tablet, a surveillance device, or a vehicle-mounted device. The zoom lens may be used for photographing and video recording, and a photographing scenario of the zoom lens includes various complex and diversified photographing application scenarios, for example, different scenarios such as indoor, outdoor, people, and an environment. A mobile phone is used as an example. FIG. 1 shows a sectional view of the mobile phone. A lens 201 in a camera module 200 is fastened to a housing 100 of the mobile terminal, and a photosensitive element 202 is fastened inside the housing 100. During use, light passes through the lens 201 and enters the photosensitive element 202, and the photosensitive element 202 converts an optical signal into an electrical signal and performs imaging, to implement a photographing effect. The camera module 200 in a conventional technology cannot be used for two different photographing modes, that is, a telephoto mode and a macro mode. Therefore, an embodiment of this application provides a zoom lens.

Refer to FIG. 2. An embodiment of this application provides a zoom lens. The zoom lens includes a first lens group G1 and a second lens group G2 that are arranged from an object side to an image side. In addition, a stop 30 may be further disposed in the zoom lens, and the stop 30 is on a side, of the first lens group G1, closer to the object side, to restrict light emitted into the first lens group G1.

The first lens group G1 has one to three lenses, and the first lens group G1 has a positive focal power. A first lens in the first lens group G1 has a positive focal power. The second lens group G2 has one or two lenses, and the second lens group G2 has a negative focal power. The first lens group G1 and the second lens group G2 may slide relative to each other along an optical axis, and the zoom lens implements focusing as the first lens group G1 or the second lens group G2 moves along a direction of the optical axis. In a comparative example not according to the claimed invention, the second lens group G2 may be fixed and the first lens group G1 slides along the optical axis to implement focusing; or the first lens group G1 may be fixed and the second lens group G2 slides along the optical axis to implement focusing. As shown in FIG. 3, FIG. 3 shows an example in which the second lens group G2 slides relative to the first lens group G1. During focusing, the second lens group G2 may move back and forth along the optical axis to adjust a focus of the zoom lens.

For different photographing scenarios, the zoom lens has a telephoto state and a macro state. When the zoom lens is in the telephoto state, the second lens group G2 is close to the object side. In this case, the zoom lens may be used to photograph an object that is relatively far away from the zoom lens. When the zoom lens is in the macro state, the second lens group G2 is close to the image side. In this case, the zoom lens may be used to photograph an object that is relatively close to the zoom lens.

When the first lens group G1 and the second lens group G2 are disposed, a focal length EFLG1 of the first lens group G1 and a focal length EFLG2 of the second lens group G2 satisfy the following conditions: A ratio of the focal length EFLG1 of the first lens group to the focal length EFLG2 of the second lens group satisfies 0.4<|EFLG1/EFLG2|<1.22; and a ratio of the focal length EFLG2 of the second lens group to a focal length EFL of the optical lens satisfies 0.4<|EFLG2/EFL|<1. In this way, it is ensured that the zoom lens satisfies different photographing scenarios such as telephotography and macro photography. For example, in the telephoto state, the second lens group G2 is close to the object side, and a focusing distance ODt of the zoom lens satisfies 1 m<ODt<∞; and in the macro state, the second lens group G2 is close to the image side, and a focusing distance Odm of the zoom lens satisfies 0.03 m<Odm<0.2 m.

When the first lens group G1 is specifically disposed, the first lens group G1 may include at least one lens; and the first lens that is closest to the object side is made of optical glass, and the first lens has a positive focal power. For example, the first lens group G1 includes the first lens and a second lens that are arranged from the object side to the image side; and the first lens has a positive focal power, and the second lens has a negative focal power. When the second lens group G2 is disposed, the second lens group G2 includes at least one lens; and a surface, facing the image side, of a lens that is in the second lens group G2 and that is closest to the object side is a concave surface. It should be understood that the lenses in the first lens group G1 and the second lens group G2 may be of a spherical surface type or an aspheric surface type.

In a process in which the zoom lens changes from the telephoto state to the macro state, the second lens group G2 moves from the object side to the image side, and a ratio of a moving distance △ of the second lens group to a total track length TTL of the zoom lens satisfies △/TTL<0.4. For example, the moving distance △ of the second lens group is less than 4 mm. For example, the moving distance △ is 1 mm, 2 mm, 3 mm, 4 mm, or another different distance.

In addition, an aperture of the zoom lens provided in this embodiment of this application satisfies 2.8>F#. Therefore, it is ensured that enough light can enter the zoom lens, thereby ensuring an imaging effect. A macro horizontal magnification of the zoom lens satisfies 0.3<β<0.7.

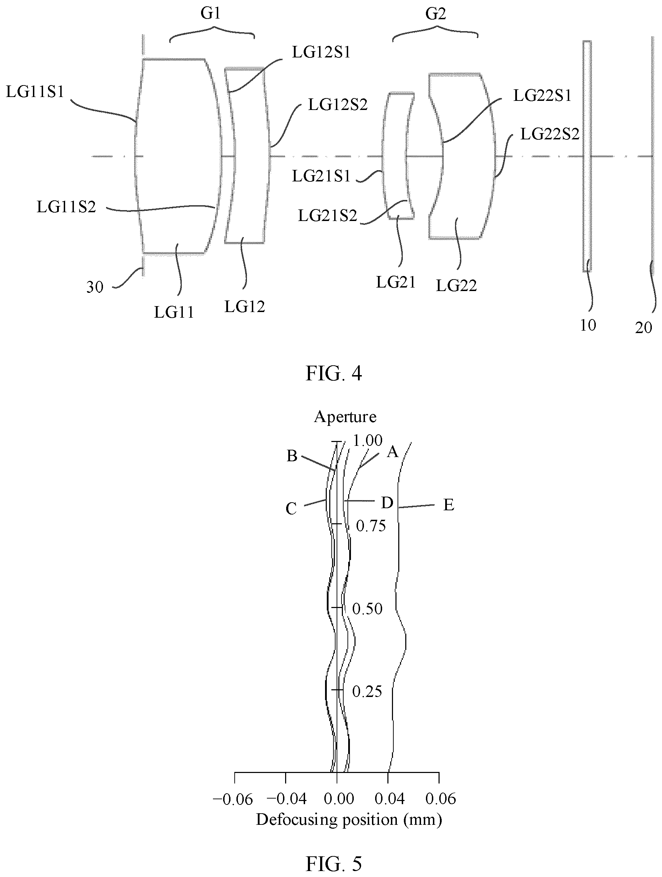

Refer to FIG. 4. FIG. 4 is a schematic diagram of a structure of a first type of zoom lens according to an embodiment of this application. From left to right, that is, from an object side to an image side, a zoom lens includes a first lens group G1 and a second lens group G2 that are sequentially arranged. The first lens group G1 includes two lenses, that is, a first lens LG11 and a second lens LG12 sequentially from the object side to the image side; and the second lens group G2 includes two lenses, that is, a third lens LG21 and a fourth lens LG22 sequentially from the object side to the image side. In this embodiment, the second lens group G2 performs focusing along a direction of an optical axis, and is applicable to a photographing scenario of an optical lens for macro photography and telephotography.

In an optional solution, the zoom lens may further include an optical filter 10. For example, in a direction from the object side to the image side, the optical filter configured to correct a color deviation or a plate glass L1 configured to protect an imaging photosensitive element is placed behind the second lens group G2. An imaging sensor 20 is located on an image plane. The imaging sensor 20 may be a CCD, or may be a CMOS.

In the zoom lens provided in this embodiment of this application, the first lens group G1 has a positive focal power, and the second lens group G2 has a negative focal power. For example, a focal length EFLG1 of the first lens group G1 is 8.15 mm, and a focal length EFLG2 of the second lens group G2 is -12.45 mm. A ratio of the focal length EFLG1 of the first lens group G1 to the focal length EFLG2 of the second lens group G2 is |EFLG1/EFLG2|=0.65, and a ratio of a focal length EFL of the second lens G2 to a focal length EFLG1 of the zoom lens is |EFLG2/EFL|=0.86.

The first lens group G1 includes two lenses, that is, a first lens LG11 and a second lens LG12. The first lens LG11 has a positive focal power, and the second lens LG12 has a negative focal power. In addition, a material of the first lens LG11 is optical glass, and is specifically an optical glass convex lens. The second lens LG12 is made of optical glass or optical plastic. The second lens group G2 includes two lenses, that is, a third lens LG21 and a fourth lens LG22. The third lens LG21 and the fourth lens LG22 may each have a positive focal power or a negative focal power. This is not specifically limited herein. Materials of the third lens LG21 and the fourth lens LG22 may be optical glass, or may be optical plastic. This is not specifically limited in this application.

If the focal length of the zoom lens is 14.45 mm, an aperture F# is 3.42, a total track length TTL is 14.94 mm, and a half a height of the image plane, that is, a half of an image height IH=2.5 mm. A horizontal magnification in the macro state satisfies β=0.3.

When the zoom lens changes from the telephoto state to the macro state, a moving distance △ of the second lens group G2 is 2.4 mm, and a ratio of the moving distance △ to the total track length is △/TTL=0.16. For ease of understanding of the zoom lens provided in this embodiment of this application, parameters of various lenses and the zoom lens are described in detail by using a specific table.

Meanings of reference signs in the table below are first described. LG11S1 refers to a surface, of the first lens LG11, facing the object side, and LG11S2 refers to a surface, of the first lens LG11, facing the image side;

LG12S1 refers to a surface, of the second lens LG12, facing the object side, and LG12S2 refers to a surface, of the second lens LG12, facing the image side; LG21S1 refers to a side, of the third lens LG21, facing the object side, and LG21S2 refers to a side, of the third lens LG21, facing the image side; and LG22S1 refers to a side, of the fourth lens LG22, facing the object side, and LG22S2 refers to a side, the fourth lens LG22, facing the image side.

First, refer to Table 1a. Table 1a shows aspheric coefficients of each aspheric lens, and A4 to A30 are aspheric coefficients.

**Table 1a**

| LG11S1 | | LG11S2 | | LG12S1 | | LG12S2 | |
|---|---|---|---|---|---|---|---|
| A4 | -3.99E-03 | A4 | -7.39E-03 | A4 | 6.41E-03 | A4 | 9.80E-03 |
| A6 | -2.45E-04 | A6 | 1.19E-02 | A6 | 2.32E-02 | A6 | -4.08E-04 |
| A8 | -6.38E-05 | A8 | -1.28E-02 | A8 | -3.99E-02 | A8 | 3.19E-02 |
| A10 | 1.66E-04 | A10 | 8.21E-03 | A10 | 6.08E-02 | A10 | -1.06E-01 |
| A12 | -3.01E-04 | A12 | -3.63E-03 | A12 | -8.60E-02 | A12 | 1.90E-01 |
| A14 | 2.17E-04 | A14 | 1.10E-03 | A14 | 9.74E-02 | A14 | -2.22E-01 |
| A16 | -8.37E-05 | A16 | -2.23E-04 | A16 | -8.14E-02 | A16 | 1.80E-01 |
| A18 | 1.80E-05 | A18 | 2.91E-05 | A18 | 4.91E-02 | A18 | -1.04E-01 |
| A20 | -2.06E-06 | A20 | -2.24E-06 | A20 | -2.13E-02 | A20 | 4.28E-02 |
| A22 | 9.71E-08 | A22 | 7.89E-08 | A22 | 6.52E-03 | A22 | -1.24E-02 |
| A24 | | A24 | | A24 | -1.38E-03 | A24 | 2.48E-03 |
| A26 | | A26 | | A26 | 1.93E-04 | A26 | -3.20E-04 |
| A28 | | A28 | | A28 | -1.59E-05 | A28 | 2.35E-05 |
| A30 | | A30 | | A30 | 6.04E-07 | A30 | -7.16E-07 |

| LG21S1 | | LG21S2 | | LG22S1 | | LG22S2 | |
|---|---|---|---|---|---|---|---|
| A4 | 1.90E-02 | A4 | 2.83E-02 | A4 | 3.10E-02 | A4 | 4.77E-03 |
| A6 | 9.36E-03 | A6 | 1.12E-02 | A6 | -1.08E-01 | A6 | -4.11E-03 |
| A8 | -2.79E-02 | A8 | -5.67E-02 | A8 | 7.67E-01 | A8 | 8.17E-03 |
| A10 | 6.74E-02 | A10 | 3.10E-01 | A10 | -3.28E+00 | A10 | -1.17E-02 |
| A12 | -1.51E-01 | A12 | -1.23E+00 | A12 | 9.07E+00 | A12 | 8.41E-03 |
| A14 | 2.75E-01 | A14 | 3.22E+00 | A14 | -1.70E+01 | A14 | -1.55E-05 |
| A16 | -3.61E-01 | A16 | -5.55E+00 | A16 | 2.22E+01 | A16 | -5.53E-03 |
| A18 | 3.32E-01 | A18 | 6.53E+00 | A18 | -2.07E+01 | A18 | 5.33E-03 |
| A20 | -2.13E-01 | A20 | -5.33E+00 | A20 | 1.37E+01 | A20 | -2.74E-03 |
| A22 | 9.49E-02 | A22 | 3.02E+00 | A22 | -6.43E+00 | A22 | 8.90E-04 |
| A24 | -2.87E-02 | A24 | -1.17E+00 | A24 | 2.08E+00 | A24 | -1.87E-04 |
| A26 | 5.63E-03 | A26 | 2.92E-01 | A26 | -4.40E-01 | A26 | 2.47E-05 |
| A28 | -6.44E-04 | A28 | -4.27E-02 | A28 | 5.49E-02 | A28 | -1.86E-06 |
| A30 | 3.27E-05 | A30 | 2.78E-03 | A30 | -3.05E-03 | A30 | 8.93E-08 |

In Table 1a, in this embodiment, all aspheric surface types may be limited by, but not limited to, the following aspheric surface formula: $z = \frac{{cr}^{2}}{1 + \sqrt{1 - {Kc}^{2} {r}^{2}}} + {A}_{2} {r}^{2} + {A}_{4} {r}^{4} + {A}_{6} {r}^{6} + {A}_{8} {r}^{8} + {A}_{10} {r}^{10} + {A}_{12} {r}^{12}$

z is a sag of an aspheric surface, r is a radial coordinate of the aspheric surface, c is a spherical curvature at a vertex of the aspheric surface, K is a conic constant, and A2, A4, ..., and A30 are aspheric coefficients.

Refer to Table 1b. Table 1b shows basic parameters of the zoom lens in the telephoto state. R represents a radius of curvature, Th represents a surface thickness, Nd represents a refractive index of a material, Vd represents an Abbe number of the material, SA (Semi-Aperture) represents a radial aperture, Conic represents a conic coefficient, inf represents infinity, Object represents an object plane, Stop represents a stop 30, Sphere represents a spherical surface, Asphere represents an aspheric surface, and Image represents an image plane. L1S1 is a surface, of the plate glass L1, facing the object side, and L1S2 is a surface, of the plate glass L1, facing the image side. For same English terms in a table below, refer to the foregoing explanations. Details are not described again.

**Table 1b**

| Surface number | Surface type | R (mm) | Th (mm) | Nd | Vd | SA (mm) | Conic |
|---|---|---|---|---|---|---|---|
| Object | Sphere | inf | inf | | | | |
| Stop | Sphere | inf | -0.23 | | | 2.20 | |
| LG11S1 | Asphere | 6.15 | 2.50 | 1.82 | 49.71 | 2.11 | |
| LG11S2 | Asphere | -5.87 | 0.39 | | | 2.11 | |
| LG12S1 | Asphere | -4.24 | 1.00 | 1.64 | 23.53 | 1.90 | |
| LG12S2 | Asphere | -5.58 | 0.85 | | | 1.64 | |
| LG21S1 | Asphere | 7.47 | 0.69 | 1.64 | 23.53 | 1.37 | |
| LG21S2 | Asphere | 6.31 | 1.06 | | | 1.26 | |
| LG22S1 | Asphere | -2.22 | 1.50 | 1.54 | 55.93 | 1.32 | 0.68 |
| LG22S2 | Asphere | -3.88 | 4.94 | | | 1.78 | 0.77 |
| L1S1 | Sphere | inf | 0.21 | 1.52 | 64.17 | 3 | |
| L1S2 | Sphere | inf | 1.8 | | | 3 | |
| Image | Sphere | inf | 0 | | | 2.5 | |

Refer to Table 1c. Table 1c shows basic parameters of the zoom lens in the macro state. R represents a radius of curvature, Th represents a surface thickness, Nd represents a refractive index of a material, Vd represents an Abbe number of the material, SA (Semi-Aperture) represents a radial aperture, Conic represents a conic coefficient, and inf represents infinity. For same English terms in a table below, refer to the foregoing explanations. Details are not described again.

**Table 1c**

| Surface number | Surface type | R (mm) | Th (mm) | Nd | Vd | SA (mm) | Conic |
|---|---|---|---|---|---|---|---|
| Object | Sphere | inf | 50.11 | | | | |
| Stop | Sphere | inf | -0.23 | | | 2.20 | |
| LG11S1 | Asphere | 6.15 | 2.50 | 1.82 | 49.71 | 2.11 | |
| LG11S2 | Asphere | -5.87 | 0.39 | | | 2.11 | |
| LG12S1 | Asphere | -4.24 | 1.00 | 1.64 | 23.53 | 1.90 | |
| LG12S2 | Asphere | -5.58 | 3.25 | | | 1.64 | |
| LG21S1 | Asphere | 7.47 | 0.69 | 1.64 | 23.53 | 1.37 | |
| LG21S2 | Asphere | 6.31 | 1.06 | | | 1.26 | |
| LG22S1 | Asphere | -2.22 | 1.50 | 1.54 | 55.93 | 1.32 | 0.68 |
| LG22S2 | Asphere | -3.88 | 2.54 | | | 1.78 | 0.77 |
| L1S1 | Sphere | inf | 0.21 | 1.52 | 64.17 | 3 | |
| L1S2 | Sphere | inf | 1.8 | | | 3 | |
| Image | Sphere | inf | 0 | | | 2.5 | |

Refer to Table 1d. Table 1d shows parameters of the zoom lens. When the foregoing parameters are used in the lenses in the first lens group G1 and the second lens group G2, corresponding parameters of the zoom lens are shown in Table 1d. A macro magnification β represents a horizontal magnification of the zoom lens in the macro state; infinity F# represents an F-number of the zoom lens in the telephoto state; EFLG1 is the focal length of the first lens group G1; EFLG2 is the focal length of the second lens group G2; infinity EFL is a focal length of the zoom lens in the telephoto state; and Δ/TTL represents a ratio of a zoom distance to a total track length. For same English terms in a table below, refer to the foregoing explanations. Details are not described again.

**Table 1d**

| | |
|---|---|
| Macro magnification β | 0.30 |
| Infinity F# | 3.42 |
| EFLG1 | 8.15 |
| EFLG2 | -12.45 |
| Infinity EFL | 14.45 |
| \|EFLG1/EFLG2\| | 0.65 |
| \|EFLG2/EFL\| | 0.86 |
| △ | 2.40 |
| Total track length TTL | 14.94 |
| △/TTL | 0.16 |

For ease of understanding a photographing effect provided in this embodiment of this application, the zoom lens shown in FIG. 4 is used as an example for simulation. For specific parameters of the zoom lens, refer to Table 1a, Table 1b, Table 1c, and Table 1d. A simulation effect of the zoom lens is described below in detail with reference to the accompanying drawings.

First, refer to FIG. 5. FIG. 5 shows a spherical aberration of the zoom lens in the telephoto state. For ease of giving an example, light of different frequencies is used as examples for simulation. Light of several frequencies that are commonly seen during imaging are shown in FIG. 5. For example, five solid curves in FIG. 5 represent light that has a wavelength of 650 nm, 587 nm, 546 nm, 486 nm, and 435 nm respectively. For ease of giving an example, in FIG. 5, A represents the light that has a wavelength of 650 nm, B represents the light that has a wavelength of 587 nm, C represents the light that has a wavelength of 546 nm, D represents the light that has a wavelength of 486 m, and E represents the light that has a wavelength of 435 nm. Refer to the five solid lines shown in FIG. 5. It can be learned that a defocusing amount of the light that has the wavelength is within a very small range from -0.01 mm to 0.05 mm. A problem of color unmixing can be avoided in an image photographed by the zoom lens, to obtain a good photographing effect.

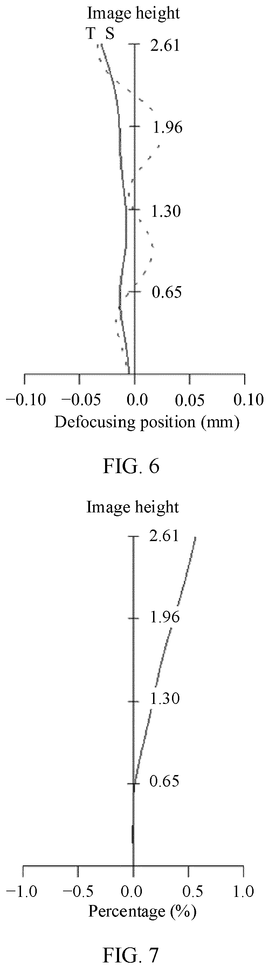

Refer to FIG. 6. FIG. 6 shows astigmatism of the zoom lens in the telephoto state. In the diagram of astigmatism, a solid line represents a field curvature of light that has a center wavelength (555 nm) on a meridional image plane, and a dashed line represents a field curvature of light that has a center wavelength (555 nm) on a sagittal image plane. It can be seen from FIG. 6 that there is a sharply focused image in an entire field of view.

Refer to FIG. 7. FIG. 7 shows a distortion of the zoom lens in the telephoto state. A solid line in the diagram of the distortion represents a distortion value of light that has a center wavelength (555 nm) and that passes through the zoom lens. It can be learned from FIG. 7 that the distortion of the light is small, and is less than an image distortion threshold 2% that can be perceived by human eyes.

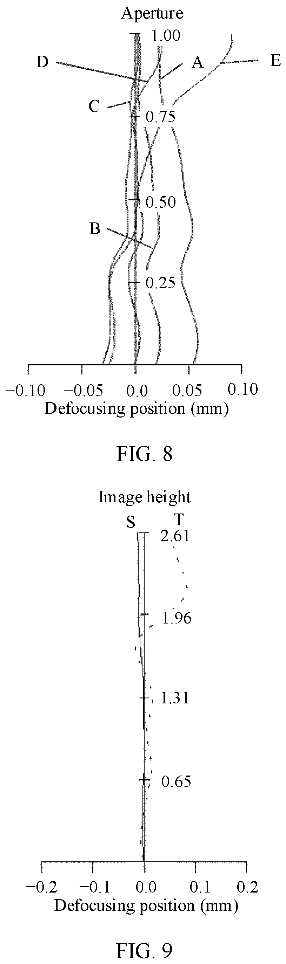

Refer to FIG. 8. FIG. 8 shows a spherical aberration of the zoom lens in the macro state. For ease of giving an example, light of different frequencies is used as examples for simulation. Light of several frequencies that are commonly seen during imaging are shown in FIG. 8. For example, five solid curves in FIG. 8 represent light that has a wavelength of 650 nm, 587 nm, 546 nm, 486 nm, and 435 nm respectively. For ease of giving an example, in FIG. 8, A represents the light that has a wavelength of 650 nm, B represents the light that has a wavelength of 587 nm, C represents the light that has a wavelength of 546 nm, D represents the light that has a wavelength of 486 m, and E represents the light that has a wavelength of 435 nm. Refer to the five solid lines shown in FIG. 8. It can be learned that a defocusing amount of the light that has the wavelength is within a very small range from -0.03 mm to 0.08 mm. A problem of color unmixing can be avoided in an image photographed by the zoom lens, to obtain a good photographing effect.

Refer to FIG. 9. FIG. 9 shows astigmatism of the zoom lens in the macro state. In the diagram of astigmatism, a solid line represents a field curvature of light that has a center wavelength (555 nm) on a meridional image plane, and a dashed line represents a field curvature of light that has a center wavelength (555 nm) on a sagittal image plane. It can be seen from FIG. 9 that there is a sharply focused image in an entire field of view.

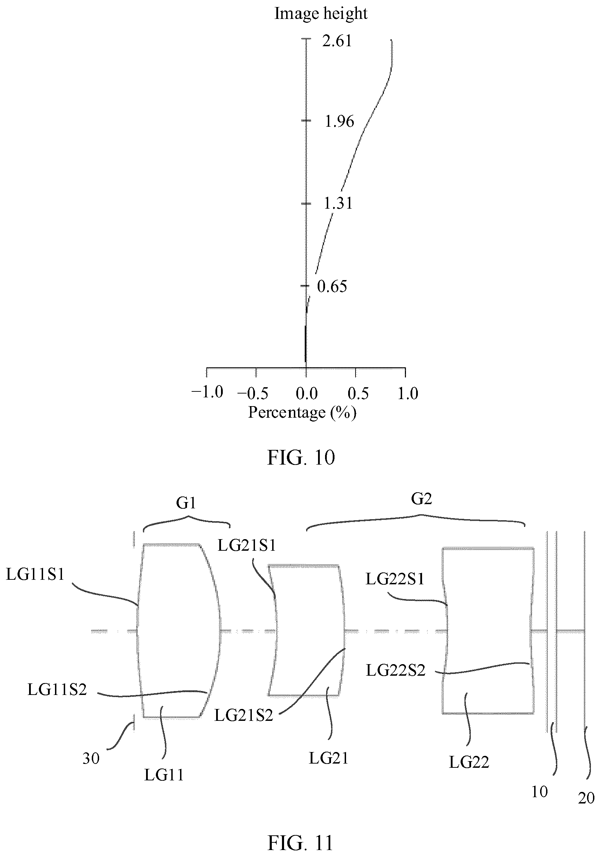

Refer to FIG. 10. FIG. 10 shows a distortion of the zoom lens in the macro state. A solid line in the diagram of the distortion represents a distortion value of light that has a center wavelength (555 nm) and that passes through the zoom lens. It can be learned from FIG. 10 that the distortion of the light is small, and is less than an image distortion threshold 2% that can be perceived by human eyes.

Refer to FIG. 11. FIG. 11 is a schematic diagram of a structure of a second type of zoom lens according to an embodiment of this application. From left to right, that is, from an object side to an image side, a zoom lens includes a first lens group G1 and a second lens group G2 that are sequentially arranged. The first lens group G1 includes one lens, and the second lens group G2 includes two lenses. In this embodiment, the second lens group G2 performs focusing along a direction of an optical axis, and is applicable to a photographing scenario of an optical lens for macro photography and telephotography.

In an optional solution, a stop 30 may be further disposed in the zoom lens, and the stop 30 is on a side, of the first lens group, closer to the object side, to restrict light emitted into the first lens group G1.

In an optional solution, the zoom lens may further include an optical filter 10. For example, in a direction from the object side to the image side, the optical filter 10 configured to correct a color deviation or a plate glass L1 configured to protect an imaging photosensitive element is placed behind the second lens group G2. An imaging sensor 20 is located on an image plane. The imaging sensor 20 may be a CCD, or may be a CMOS.

In the zoom lens provided in this embodiment of this application, the first lens group G1 has a positive focal power, and the second lens group G2 has a negative focal power. For example, a focal length EFLG1 of the first lens group G1 is 5.80 mm, and a focal length EFLG2 of the second lens group G2 is -4.75 mm. A ratio of the focal length EFLG1 of the first lens group G1 to the focal length EFLG2 of the second lens group G2 is |EFLG1/EFLG2|=1.22, and a ratio of a focal length EFL of the second lens G2 to a focal length EFLG1 of the zoom lens is |EFLG2/EFL|=0.4.

The first lens group G1 includes a first lens LG11, and the first lens LG11 has a positive focal power. In addition, a material of the first lens LG11 is optical glass, and is specifically an optical glass convex lens. The second lens group G2 includes two lenses, that is, a third lens LG21 and a fourth lens LG22. The third lens LG21 and the fourth lens LG22 each have a negative focal power. Materials of the third lens LG21 and the fourth lens LG22 may be optical glass, or may be optical plastic.

If the focal length of the zoom lens is 12 mm, an aperture F# is 3.11, a total track length TTL is 13.41 mm, and a half a height of the image plane, that is, a half of an image height IH=2.5 mm. A horizontal magnification in the macro state satisfies β=0.3.

When the zoom lens changes from the telephoto state to the macro state, a moving distance △ of the second lens group G2 is 1.31 mm, and a ratio of the moving distance △ to the total track length is △/TTL=0.1. For ease of understanding of the zoom lens provided in this embodiment of this application, parameters of various lenses and the zoom lens are described in detail by using a specific table.

Meanings of reference signs in the table below are first described. LG11S1 refers to a surface, of the first lens LG11, facing the object side, and LG11S2 refers to a surface, of the first lens LG11, facing the image side; LG21S1 refers to a side, of the third lens LG21, facing the object side, and LG21S2 refers to a side, of the third lens LG21, facing the image side; and LG22S1 refers to a side, of the fourth lens LG22, facing the object side, and LG22S2 refers to a side, the fourth lens LG22, facing the image side.

First, refer to Table 2a. Table 2a shows aspheric coefficients of each aspheric lens. A4 to A30 are aspheric coefficients.

**Table 2a**

| LG11S1 | | LG11S2 | | LG21S1 | | LG21S1 | |
|---|---|---|---|---|---|---|---|
| A4 | -4.13E-03 | A4 | 4.26E-04 | A4 | 8.03E-03 | A4 | 2.19E-03 |
| A6 | 3.66E-04 | A6 | -2.43E-04 | A6 | -1.60E-04 | A6 | 1.38E-03 |
| A8 | -6.56E-04 | A8 | -1.10E-04 | A8 | -1.63E-03 | A8 | -3.59E-03 |
| A10 | 2.89E-04 | A10 | 5.35E-05 | A10 | 2.45E-03 | A10 | 4.34E-03 |
| A12 | -7.84E-05 | A12 | -1.44E-05 | A12 | -1.97E-03 | A12 | -3.13E-03 |
| A14 | 1.19E-05 | A14 | 2.10E-06 | A14 | 1.00E-03 | A14 | 1.43E-03 |
| A16 | -1.01E-06 | A16 | -1.50E-07 | A16 | -3.41E-04 | A16 | -4.29E-04 |
| A18 | 6.29E-08 | A18 | 6.76E-09 | A18 | 7.94E-05 | A18 | 8.44E-05 |
| A20 | -1.25E-09 | A20 | -1.19E-10 | A20 | -1.27E-05 | A20 | -1.08E-05 |
| A22 | 1.32E-11 | A22 | | A22 | 1.41E-06 | A22 | 8.84E-07 |
| A24 | | A24 | | A24 | -8.95E-08 | A24 | -2.52E-08 |
| A26 | | A26 | | A26 | 4.89E-09 | A26 | 5.30E-10 |
| A28 | | A28 | | A28 | -1.34E-10 | A28 | 2.50E-11 |
| A30 | | A30 | | A30 | 1.62E-12 | A30 | -8.33E-13 |

| LG22S1 | | LG22S2 | | | | | |
|---|---|---|---|---|---|---|---|
| A4 | -1.53E-02 | A4 | -1.37E-02 | | | | |
| A6 | 3.21E-03 | A6 | -1.17E-03 | | | | |
| A8 | -6.23E-03 | A8 | 1.94E-03 | | | | |
| A10 | 6.51E-03 | A10 | -1.35E-03 | | | | |
| A12 | -4.45E-03 | A12 | 5.88E-04 | | | | |
| A14 | 2.03E-03 | A14 | -1.72E-04 | | | | |
| A16 | -6.27E-04 | A16 | 3.45E-05 | | | | |
| A18 | 1.31E-04 | A18 | -4.77E-06 | | | | |
| A20 | -1.78E-05 | A20 | 4.69E-07 | | | | |
| A22 | 1.46E-06 | A22 | -1.51E-08 | | | | |
| A24 | -4.06E-08 | A24 | 1.11E-09 | | | | |
| A26 | | A26 | -1.98E-11 | | | | |
| A28 | | A28 | | | | | |
| A30 | | A30 | | | | | |

In Table 2a, in this embodiment, all aspheric surface types may be limited by, but not limited to, the following aspheric surface formula: $z = \frac{{cr}^{2}}{1 + \sqrt{1 - {Kc}^{2} {r}^{2}}} + {A}_{2} {r}^{2} + {A}_{4} {r}^{4} + {A}_{6} {r}^{6} + {A}_{8} {r}^{8} + {A}_{10} {r}^{10} + {A}_{12} {r}^{12}$

z is a sag of an aspheric surface, r is a radial coordinate of the aspheric surface, c is a spherical curvature at a vertex of the aspheric surface, K is a conic constant, and A2, A4, ..., and A30 are aspheric coefficients.

Refer to Table 2b. Table 2b shows basic parameters of the zoom lens in the telephoto state.

**Table 2b**

| Surface number | Surface type | R (mm) | Th (mm) | Nd | Vd | SA (mm) | Conic |
|---|---|---|---|---|---|---|---|
| Object | Sphere | inf | inf | | | | |
| Stop | Sphere | inf | 0.1 | | | 1.99 | |
| LG11S1 | Asphere | 7.14 | 2.50 | 1.82 | 49.71 | 2.02 | |
| LG11S2 | Asphere | -4.30 | 0.39 | | | 2.16 | |
| LG21S1 | Asphere | 7.47 | 2.01 | 1.64 | 23.53 | 1.56 | |
| LG21S2 | Asphere | 6.31 | 3.08 | | | 1.82 | |
| LG22S1 | Asphere | -2.22 | 2.50 | 1.54 | 55.93 | 1.81 | 4.08 |
| LG22S2 | Asphere | -3.88 | 1.80 | | | 2.38 | -1.00 |
| L1S1 | Sphere | inf | 0.21 | 1.52 | 64.17 | 3 | |
| L1S2 | Sphere | inf | 0.9 | | | 3 | |
| Image | Sphere | inf | 0 | | | 2.5 | |

Refer to Table 2c. Table 2c shows basic parameters of the zoom lens in the macro state.

**Table 2c**

| Surface number | Surface type | R (mm) | Th (mm) | Nd | Vd | SA (mm) | Conic |
|---|---|---|---|---|---|---|---|
| Object | Sphere | inf | 39.37 | | | | |
| Stop | Sphere | inf | 0.1 | | | 1.99 | |
| LG11S1 | Asphere | 7.14 | 2.50 | 1.82 | 49.71 | 2.02 | |
| LG11S2 | Asphere | -4.30 | 1.70 | | | 2.16 | |
| LG21S1 | Asphere | 7.47 | 2.01 | 1.64 | 23.53 | 1.56 | |
| LG21S2 | Asphere | 6.31 | 3.08 | | | 1.82 | |
| LG22S1 | Asphere | -2.22 | 2.50 | 1.54 | 55.93 | 1.81 | 4.08 |
| LG22S2 | Asphere | -3.88 | 0.49 | | | 2.38 | -1.00 |
| L1S1 | Sphere | inf | 0.21 | 1.52 | 64.17 | 3 | |
| L1S2 | Sphere | inf | 0.9 | | | 3 | |
| Image | Sphere | inf | 0 | | | 2.5 | |

Refer to Table 2d. Table 2d shows parameters of the zoom lens. When the foregoing parameters are used in the lenses in the first lens group G1 and the second lens group G2, corresponding parameters of the zoom lens are shown in Table 2d.

**Table 2d**

| | |
|---|---|
| Macro magnification β | 0.3 |
| Infinity F# | 3.42 |
| EFLG1 | 5.80 |
| EFLG2 | -4.75 |
| Infinity EFL | 12.00 |
| \|EFLG1/EFLG2\| | 1.22 |
| \|EFLG2/EFL\| | 0.40 |
| △ | 1.31 |
| Total track length TTL | 13.41 |
| △/TTL | 0.10 |

For ease of understanding a photographing effect provided in this embodiment of this application, the zoom lens shown in FIG. 11 is used as an example for simulation. For specific parameters of the zoom lens, refer to Table 2a, Table 2b, Table 2c, and Table 2d. A simulation effect of the zoom lens is described below in detail with reference to the accompanying drawings.

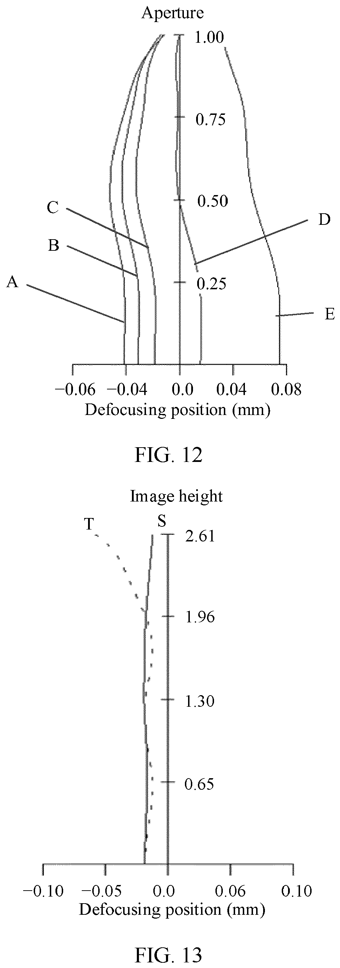

First, refer to FIG. 12. FIG. 12 shows a spherical aberration of the zoom lens in the telephoto state. For ease of giving an example, light of different frequencies is used as examples for simulation. Light of several frequencies that are commonly seen during imaging are shown in FIG. 12. For example, five solid curves in FIG. 12 represent light that has a wavelength of 650 nm, 587 nm, 546 nm, 486 nm, and 435 nm respectively. For ease of giving an example, in FIG. 12, A represents the light that has a wavelength of 650 nm, B represents the light that has a wavelength of 587 nm, C represents the light that has a wavelength of 546 nm, D represents the light that has a wavelength of 486 m, and E represents the light that has a wavelength of 435 nm. Refer to the five solid lines shown in FIG. 12. It can be learned that a defocusing amount of the light that has the wavelength is within a very small range from -0.06 mm to 0.08 mm. A problem of color unmixing can be avoided in an image photographed by the zoom lens, to obtain a good photographing effect.

Refer to FIG. 13. FIG. 13 shows astigmatism of the zoom lens in the telephoto state. In the diagram of astigmatism, a solid line represents a field curvature of light that has a center wavelength (555 nm) on a meridional image plane, and a dashed line represents a field curvature of light that has a center wavelength (555 nm) on a sagittal image plane. It can be seen from FIG. 13 that there is a sharply focused image in an entire field of view.

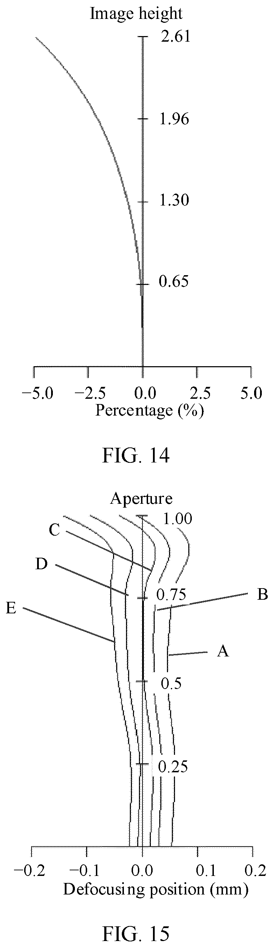

Refer to FIG. 14. FIG. 14 shows a distortion of the zoom lens in the telephoto state. A solid line in the diagram of the distortion represents a distortion value of light that has a center wavelength (555 nm) and that passes through the zoom lens. It can be learned from FIG. 14 that the distortion of the light is small, and is less than an image distortion threshold 2% that can be perceived by human eyes.

Refer to FIG. 15. FIG. 15 shows a spherical aberration of the zoom lens in the macro state. For ease of giving an example, light of different frequencies is used as examples for simulation. Light of several frequencies that are commonly seen during imaging are shown in FIG. 15. For example, five solid curves in FIG. 15 represent light that has a wavelength of 650 nm, 587 nm, 546 nm, 486 nm, and 435 nm respectively. For ease of giving an example, in FIG. 15, A represents the light that has a wavelength of 650 nm, B represents the light that has a wavelength of 587 nm, C represents the light that has a wavelength of 546 nm, D represents the light that has a wavelength of 486 m, and E represents the light that has a wavelength of 435 nm. Refer to the five solid lines shown in FIG. 15. It can be learned that a defocusing amount of the light that has the wavelength is within a very small range from -0.02 mm to 0.1 mm. A problem of color unmixing can be avoided in an image photographed by the zoom lens, to obtain a good photographing effect.

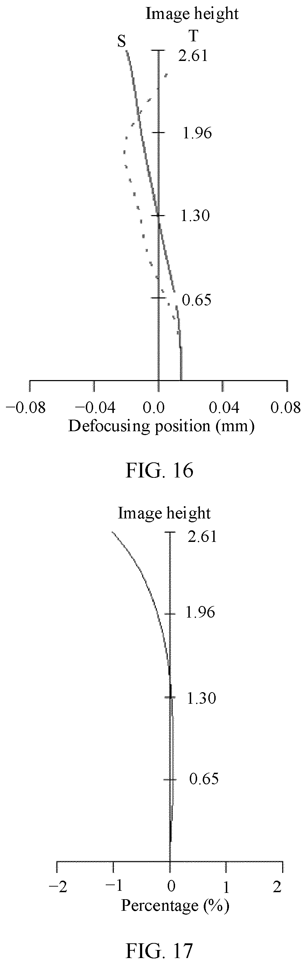

Refer to FIG. 16. FIG. 16 shows astigmatism of the zoom lens in the macro state. In the diagram of astigmatism, a solid line represents a field curvature of light that has a center wavelength (555 nm) on a meridional image plane, and a dashed line represents a field curvature of light that has a center wavelength (555 nm) on a sagittal image plane. It can be seen from FIG. 16 that there is a sharply focused image in an entire field of view.

Refer to FIG. 17. FIG. 17 shows a distortion of the zoom lens in the macro state. A solid line in the diagram of the distortion represents a distortion value of light that has a center wavelength (555 nm) and that passes through the zoom lens. It can be learned from FIG. 17 that the distortion of the light is small, and is less than an image distortion threshold 2% that can be perceived by human eyes.

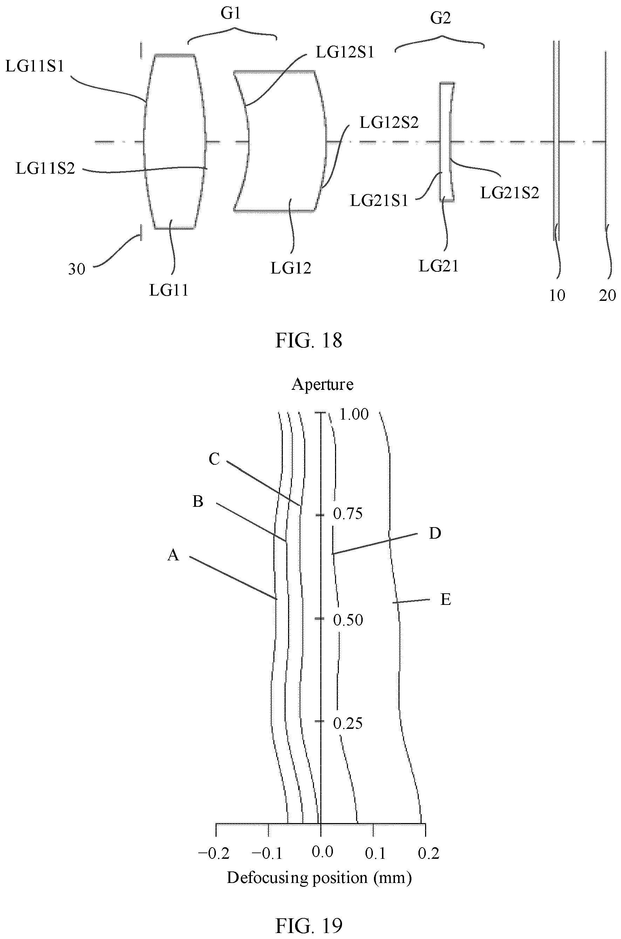

Refer to FIG. 18. FIG. 18 is a schematic diagram of a structure of a third type of zoom lens according to an embodiment of this application. From left to right, that is, from an object side to an image side, a zoom lens includes a first lens group G1 and a second lens group G2 that are sequentially arranged. The first lens group G1 includes two lenses, and the second lens group G2 includes one lens. In this embodiment, the second lens group G2 performs focusing along a direction of an optical axis, and is applicable to a photographing scenario of an optical lens for macro photography and telephotography.

In an optional solution, a stop 30 may be further disposed in the zoom lens, and the stop 30 is on a side, of the first lens group, closer to the object side, to restrict light emitted into the first lens group G1.

In an optional solution, the zoom lens may further include an optical filter 10. For example, in a direction from the object side to the image side, the optical filter 10 configured to correct a color deviation or a plate glass L1 configured to protect an imaging photosensitive element is placed behind the second lens group G2. An imaging sensor 20 is located on an image plane. The imaging sensor 20 may be a CCD, or may be a CMOS.

In the zoom lens provided in this embodiment of this application, the first lens group G1 has a positive focal power, and the second lens group G2 has a negative focal power. For example, a focal length EFLG1 of the first lens group G1 is 10.27 mm, and a focal length EFLG2 of the second lens group G2 is -16.4 mm. A ratio of the focal length EFLG1 of the first lens group G1 to the focal length EFLG2 of the second lens group G2 is |EFLG1/EFLG2|=0.63, and a ratio of a focal length EFL of the second lens G2 to a focal length EFLG1 of the zoom lens is |EFLG2/EFL|=0.99.

The first lens group G1 includes a first lens LG11 and a second lens LG12. The first lens LG11 has a positive focal power, and the second lens LG12 has a negative focal power. In addition, a material of the first lens LG11 is optical glass, and is specifically an optical glass convex lens. The second lens group G2 includes a third lens LG21. The third lens LG21 may have a positive focal power, or may have a negative focal power. This is not specifically limited herein. A material of the third lens LG21 may be optical glass, or may be optical plastic. This is not specifically limited in this application.

If the focal length of the zoom lens is 16.6 mm, an aperture F# is 3.32, a total track length TTL is 18 mm, and a half a height of the image plane, that is, a half of an image height IH=2.5 mm. A horizontal magnification in the macro state satisfies β=0.3.

When the zoom lens changes from the telephoto state to the macro state, a moving distance △ of the second lens group G2 is 4 mm, and a ratio of the moving distance △ to the total track length is Δ/TTL=0.22. For ease of understanding of the zoom lens provided in this embodiment of this application, parameters of various lenses and the zoom lens are described in detail by using a specific table.

Meanings of reference signs in the table below are first described. LG11S1 refers to a surface, of the first lens LG11, facing the object side, and LG11S2 refers to a surface, of the first lens LG11, facing the image side; LG12S1 refers to a surface, of the second lens LG12, facing the object side, and LG12S2 refers to a surface, of the second lens LG12, facing the image side; and LG21S1 refers to a side, of the third lens LG21, facing the object side, and LG21S2 refers to a side, of the third lens LG21, facing the image side.

First, refer to Table 3a. Table 3a shows aspheric coefficients of each aspheric lens. A4 to A30 are aspheric coefficients.

**Table 3a**

| LG11S1 | | LG11S2 | | LG12S1 | | LG12S1 | |
|---|---|---|---|---|---|---|---|
| A4 | -5.27E-04 | A4 | 9.60E-04 | A4 | 4.50E-03 | A4 | 2.36E-03 |
| A6 | 1.65E-04 | A6 | 6.78E-04 | A6 | -2.18E-03 | A6 | 2.74E-03 |
| A8 | -8.86E-05 | A8 | -4.52E-04 | A8 | 3.42E-03 | A8 | -3.91E-03 |
| A10 | 2.46E-05 | A10 | 1.65E-04 | A10 | -3.01E-03 | A10 | 3.38E-03 |
| A12 | -4.12E-06 | A12 | -3.66E-05 | A12 | 1.64E-03 | A12 | -1.88E-03 |
| A14 | 3.77E-07 | A14 | 4.99E-06 | A14 | -5.98E-04 | A14 | 7.04E-04 |
| A16 | -3.43E-08 | A16 | -4.34E-07 | A16 | 1.49E-04 | A16 | -1.83E-04 |
| A18 | 5.50E-10 | A18 | 7.34E-09 | A18 | -2.58E-05 | A18 | 3.35E-05 |
| A20 | -5.11E-12 | A20 | -5.76E-10 | A20 | 3.10E-06 | A20 | -4.35E-06 |
| A22 | -2.43E-14 | A22 | 6.62E-12 | A22 | -2.73E-07 | A22 | 3.79E-07 |
| A24 | | A24 | | A24 | 9.31E-10 | A24 | -3.81E-08 |
| A26 | | A26 | | A26 | -5.31E-10 | A26 | 9.82E-10 |
| A28 | | A28 | | A28 | 1.12E-11 | A28 | -2.37E-11 |
| A30 | | A30 | | A30 | -1.04E-13 | A30 | 2.41E-13 |

| LG21S1 | | LG21S2 | | | | | |
|---|---|---|---|---|---|---|---|
| A4 | 6.94E-03 | A4 | 6.45E-03 | | | | |
| A6 | 1.37E-02 | A6 | 2.04E-02 | | | | |
| A8 | -2.34E-02 | A8 | -3.85E-02 | | | | |
| A10 | 2.22E-02 | A10 | 4.18E-02 | | | | |
| A12 | -1.36E-02 | A12 | -2.95E-02 | | | | |
| A14 | 5.61E-03 | A14 | 1.42E-02 | | | | |
| A16 | -1.60E-03 | A16 | -4.75E-03 | | | | |
| A18 | 3.19E-04 | A18 | 1.12E-03 | | | | |
| A20 | -4.45E-05 | A20 | -1.88E-04 | | | | |
| A22 | 4.31E-06 | A22 | 2.20E-05 | | | | |
| A24 | -3.00E-07 | A24 | -1.78E-06 | | | | |
| A26 | -1.37E-09 | A26 | 7.88E-08 | | | | |
| A28 | -3.11E-10 | A28 | -2.83E-09 | | | | |
| A30 | 3.47E-12 | A30 | 3.84E-11 | | | | |

In this embodiment, all aspheric surface types may be limited by, but not limited to, the following aspheric surface formula: $z = \frac{{cr}^{2}}{1 + \sqrt{1 - {Kc}^{2} {r}^{2}}} + {A}_{2} {r}^{2} + {A}_{4} {r}^{4} + {A}_{6} {r}^{6} + {A}_{8} {r}^{8} + {A}_{10} {r}^{10} + {A}_{12} {r}^{12}$

z is a sag of an aspheric surface, r is a radial coordinate of the aspheric surface, c is a spherical curvature at a vertex of the aspheric surface, K is a conic constant, and A2, A4, A6, A8, A10, and A12 are aspheric coefficients.

Refer to Table 3b. Table 3b shows basic parameters of the zoom lens in the telephoto state.

**Table 3b**

| Surface number | Surface type | R (mm) | Th (mm) | Nd | Vd | SA (mm) | Conic |
|---|---|---|---|---|---|---|---|
| Object | Sphere | inf | inf | | | | |
| Stop | Sphere | inf | 0.1 | | | 2.50 | |
| LG11S1 | Asphere | 7.04 | 2.41 | 1.82 | 49.71 | 2.52 | |
| LG11S2 | Asphere | -6.83 | 1.70 | | | 2.47 | -1.00 |
| LG12S1 | Asphere | -3.05 | 3.00 | 1.64 | 23.53 | 2.00 | |
| LG12S2 | Asphere | -4.24 | 0.40 | | | 2.10 | |
| LG21S1 | Asphere | -24.27 | 0.40 | 1.64 | 23.53 | 1.74 | |
| LG21S2 | Asphere | 18.93 | 8.05 | | | 1.75 | |
| L1S1 | Sphere | inf | 0.21 | 1.52 | 64.17 | 3 | |
| L1S2 | Sphere | inf | 1.83 | | | 3 | |
| Image | Sphere | inf | 0 | | | 2.5 | |

Refer to Table 3c. Table 3c shows basic parameters of the zoom lens in the macro state.

**Table 3c**

| Surface number | Surface type | R (mm) | Th (mm) | Nd | Vd | SA (mm) | Conic |
|---|---|---|---|---|---|---|---|
| Object | Sphere | inf | 53.60 | | | | |
| Stop | Sphere | inf | 0.1 | | | 2.50 | |
| LG11S1 | Asphere | 7.04 | 2.41 | 1.82 | 49.71 | 2.52 | |
| LG11S2 | Asphere | -6.83 | 1.70 | | | 2.47 | -1.00 |
| LG12S1 | Asphere | -3.05 | 3.00 | 1.64 | 23.53 | 2.00 | |
| LG12S2 | Asphere | -4.24 | 4.40 | | | 2.10 | |
| LG21S1 | Asphere | -24.27 | 0.40 | 1.64 | 23.53 | 1.74 | |
| LG21S2 | Asphere | 18.93 | 4.05 | | | 1.75 | |
| L1S1 | Sphere | inf | 0.21 | 1.52 | 64.17 | 3 | |
| L1S2 | Sphere | inf | 1.83 | | | 3 | |
| Image | Sphere | inf | 0 | | | 2.5 | |

Refer to Table 3d. Table 3d shows parameters of the zoom lens. When the foregoing parameters are used in the lenses in the first lens group G1 and the second lens group G2, corresponding parameters of the zoom lens are shown in Table 3d.

**Table 3d**

| | |
|---|---|
| Macro magnification β | 0.3 |
| Infinity F# | 3.42 |
| EFLG1 | 10.27 |
| EFLG2 | -16.4 |
| Infinity EFL | 16.6 |
| \|EFLG1/EFLG2\| | 0.63 |
| \|EFLG2/EFL\| | 0.99 |
| △ | 4 |
| Total track length TTL | 18 |
| △/TTL | 0.22 |

For ease of understanding a photographing effect provided in this embodiment of this application, the zoom lens shown in FIG. 18 is used as an example for simulation. For specific parameters of the zoom lens, refer to Table 3a, Table 3b, Table 3c, and Table 3d. A simulation effect of the zoom lens is described below in detail with reference to the accompanying drawings.

First, refer to FIG. 19. FIG. 19 shows a spherical aberration of the zoom lens in the telephoto state. For ease of giving an example, light of different frequencies is used as examples for simulation. Light of several frequencies that are commonly seen during imaging are shown in FIG. 19. For example, five solid curves in FIG. 19 represent light that has a wavelength of 650 nm, 587 nm, 546 nm, 486 nm, and 435 nm respectively. For ease of giving an example, in FIG. 19, A represents the light that has a wavelength of 650 nm, B represents the light that has a wavelength of 587 nm, C represents the light that has a wavelength of 546 nm, D represents the light that has a wavelength of 486 m, and E represents the light that has a wavelength of 435 nm. Refer to the five solid lines shown in FIG. 19. It can be learned that a defocusing amount of the light that has the wavelength is within a very small range from -0.12 mm to 0.15 mm. A problem of color unmixing can be avoided in an image photographed by the zoom lens, to obtain a good photographing effect.

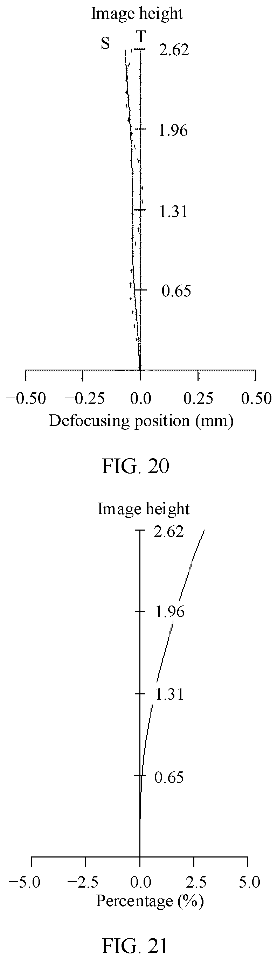

Refer to FIG. 20. FIG. 20 shows astigmatism of the zoom lens in the telephoto state. In the diagram of astigmatism, a solid line represents a field curvature of light that has a center wavelength (555 nm) on a meridional image plane, and a dashed line represents a field curvature of light that has a center wavelength (555 nm) on a sagittal image plane. It can be seen from FIG. 20 that there is a sharply focused image in an entire field of view.

Refer to FIG. 21. FIG. 21 shows a distortion of the zoom lens in the telephoto state. A solid line in the diagram of the distortion represents a distortion value of light that has a center wavelength (555 nm) and that passes through the zoom lens. It can be learned from FIG. 21 that the distortion of the light is small, and is less than an image distortion threshold 2% that can be perceived by human eyes.

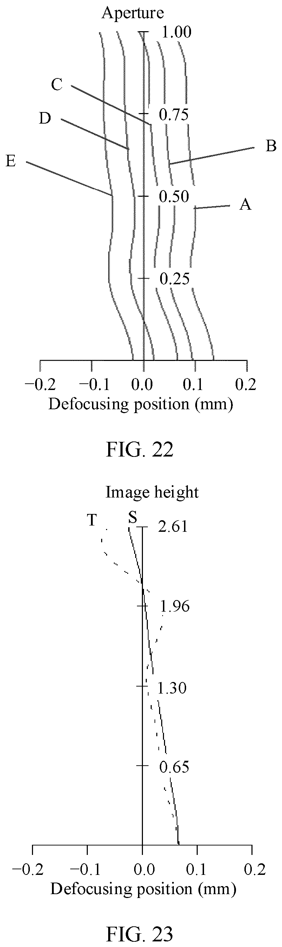

Refer to FIG. 22. FIG. 22 shows a spherical aberration of the zoom lens in the macro state. For ease of giving an example, light of different frequencies is used as examples for simulation. Light of several frequencies that are commonly seen during imaging are shown in FIG. 22. For example, five solid curves in FIG. 22 represent light that has a wavelength of 650 nm, 587 nm, 546 nm, 486 nm, and 435 nm respectively. For ease of giving an example, in FIG. 22, A represents the light that has a wavelength of 650 nm, B represents the light that has a wavelength of 587 nm, C represents the light that has a wavelength of 546 nm, D represents the light that has a wavelength of 486 m, and E represents the light that has a wavelength of 435 nm. Refer to the five solid lines shown in FIG. 22. It can be learned that a defocusing amount of the light that has the wavelength is within a very small range from -0.02 mm to 0.01 mm. A problem of color unmixing can be avoided in an image photographed by the zoom lens, to obtain a good photographing effect.

Refer to FIG. 23. FIG. 23 shows astigmatism of the zoom lens in the macro state. In the diagram of astigmatism, a solid line represents a field curvature of light that has a center wavelength (555 nm) on a meridional image plane, and a dashed line represents a field curvature of light that has a center wavelength (555 nm) on a sagittal image plane. It can be seen from FIG. 23 that there is a sharply focused image in an entire field of view.

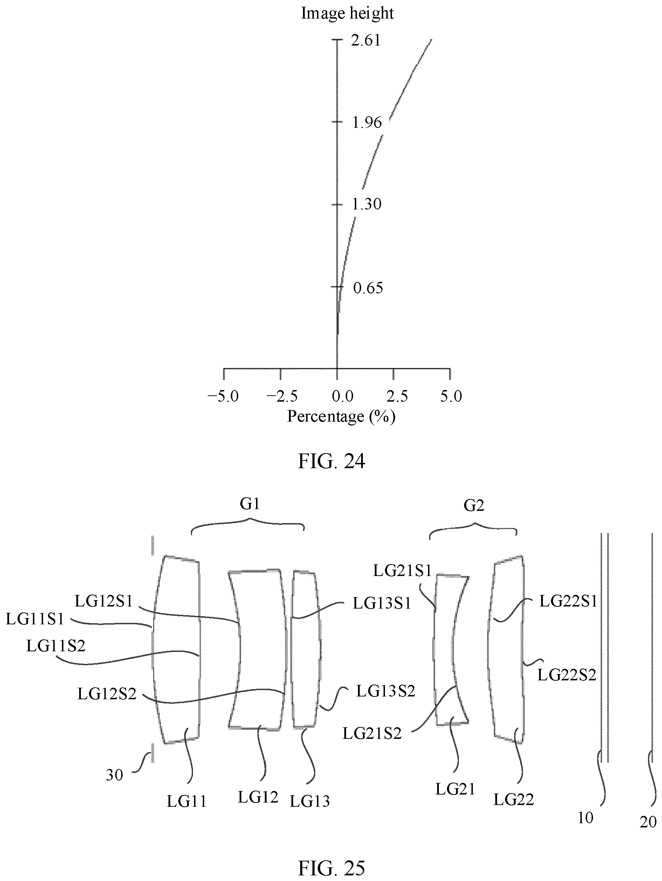

Refer to FIG. 24. FIG. 24 shows a distortion of the zoom lens in the macro state. A solid line in the diagram of the distortion represents a distortion value of light that has a center wavelength (555 nm) and that passes through the zoom lens. It can be learned from FIG. 24 that the distortion of the light is small, and is less than an image distortion threshold 2% that can be perceived by human eyes.

Refer to FIG. 25. FIG. 25 is a schematic diagram of a structure of a fourth type of zoom lens according to an embodiment of this application. From left to right, that is, from an object side to an image side, a zoom lens includes a first lens group G1 and a second lens group G2 that are sequentially arranged. The first lens group G1 includes three lenses, and the second lens group G2 includes two lenses. In this embodiment, the second lens group G2 performs focusing along a direction of an optical axis, and is applicable to a photographing scenario of an optical lens for macro photography and telephotography.

In an optional solution, a stop 30 may be further disposed in the zoom lens, and the stop 30 is on a side, of the first lens group, closer to the object side, to restrict light emitted into the first lens group G1.

In an optional solution, the zoom lens may further include an optical filter 10. For example, in a direction from the object side to the image side, the optical filter 10 configured to correct a color deviation or a plate glass L1 configured to protect an imaging photosensitive element is placed behind the second lens group G2. An imaging sensor 20 is located on an image plane. The imaging sensor 20 may be a CCD, or may be a CMOS.

In the zoom lens provided in this embodiment of this application, the first lens group G1 has a positive focal power, and the second lens group G2 has a negative focal power. For example, a focal length EFLG1 of the first lens group G1 is 8.03 mm, and a focal length EFLG2 of the second lens group G2 is -10.14 mm. A ratio of the focal length EFLG1 of the first lens group G1 to the focal length EFLG2 of the second lens group G2 is |EFLG1/EFLG2|=0.79, and a ratio of a focal length EFL of the second lens G2 to a focal length EFLG1 of the zoom lens is |EFLG2/EFL|=0.70.

The first lens group G1 includes a first lens LG11, a second lens LG12, and a third lens LG13. The first lens LG11 has a positive focal power, the second lens LG12 has a negative focal power, and the third lens LG13 has a positive focal power. In addition, a material of the first lens LG11 is optical glass, and is specifically an optical glass convex lens. The second lens group G2 includes a fourth lens LG21 and a fifth lens LG22. The fourth lens LG21 has a negative focal power, and the fifth lens LG22 may have a positive focal power, or may have a negative focal power. This is not specifically limited herein. Materials of the fourth lens LG21 and the fifth lens LG22 may be optical glass, or may be optical plastic. This is not specifically limited in this application.

If the focal length of the zoom lens is 14.45 mm, an aperture F# is 3.43, a total track length TTL is 15.5 mm, and a half a height of the image plane, that is, a half of an image height IH=2.5 mm. A horizontal magnification in the macro state satisfies β=0.3.

When the zoom lens changes from the telephoto state to the macro state, a moving distance △ of the second lens group G2 is 2.38 mm, and a ratio of the moving distance △ to the total track length is △/TTL=0.15. For ease of understanding of the zoom lens provided in this embodiment of this application, parameters of various lenses and the zoom lens are described in detail by using a specific table.

Meanings of reference signs in the table below are first described. LG11S1 refers to a surface, of the first lens LG11, facing the object side, and LG11S2 refers to a surface, of the first lens LG11, facing the image side; LG12S1 refers to a surface, of the second lens LG12, facing the object side, and LG12S2 refers to a surface, of the second lens LG12, facing the image side; LG13S1 refers to a surface, of the third lens LG13, facing the object side, and LG13S2 refers to a surface, of the third lens LG13, facing the image side; LG21S1 refers to a side, of the fourth lens LG21, facing the object side, and LG21S2 refers to a side, of the fourth lens LG21, facing the image side; and LG22S1 refers to a side, of the fifth lens LG22, facing the object side, and LG22S2 refers to a side, the fifth lens LG22, facing the image side.

First, refer to Table 4a. Table 4a shows aspheric coefficients of each aspheric lens. A4 to A30 are aspheric coefficients.

**Table 4a**

| LG12S1 | | LG12S2 | | LG13S1 | | LG13S1 | |
|---|---|---|---|---|---|---|---|
| A4 | 5.66E-03 | A4 | 3.16E-03 | A4 | -3.16E-04 | A4 | 8.13E-04 |
| A6 | -7.40E-05 | A6 | -6.44E-04 | A6 | -6.27E-04 | A6 | -2.82E-05 |
| A8 | 3.50E-05 | A8 | 1.60E-04 | A8 | 9.33E-05 | A8 | -6.16E-05 |
| A10 | -3.59E-06 | A10 | -1.29E-05 | A10 | 4.58E-06 | A10 | 1.70E-05 |

| LG21S1 | | LG21S2 | | LG22S1 | | LG22S2 | |
|---|---|---|---|---|---|---|---|
| A4 | 1.31E-03 | A4 | -1.99E-03 | A4 | -9.12E-03 | A4 | -1.00E-02 |
| A6 | -6.70E-04 | A6 | -9.29E-04 | A6 | -5.90E-04 | A6 | -5.52E-04 |
| A8 | 6.07E-04 | A8 | 1.10E-03 | A8 | 2.09E-04 | A8 | 1.21E-04 |
| A10 | -1.98E-04 | A10 | -3.26E-04 | A10 | -2.32E-05 | A10 | -1.59E-05 |
| A12 | 2.13E-05 | A12 | 2.24E-05 | A12 | 1.32E-06 | A12 | 7.16E-07 |
| A14 | | A14 | 3.00E-07 | A14 | -1.67E-06 | A14 | -9.87E-07 |
| A16 | | A16 | | A16 | -1.24E-14 | A16 | 9.5 1E-08 |

In this embodiment, all aspheric surface types may be limited by, but not limited to, the following aspheric surface formula: $z = \frac{{cr}^{2}}{1 + \sqrt{1 - {Kc}^{2} {r}^{2}}} + {A}_{2} {r}^{2} + {A}_{4} {r}^{4} + {A}_{6} {r}^{6} + ⋯ + {A}_{28} {r}^{28} + {A}_{30} {r}^{30}$

z is a sag of an aspheric surface, r is a radial coordinate of the aspheric surface, c is a spherical curvature at a vertex of the aspheric surface, K is a conic constant, and A2, A4, A6, A8, ..., A28, and A30 are aspheric coefficients.

Refer to Table 4b. Table 4b shows basic parameters of the zoom lens in the telephoto state.

**Table 4b**

| Surface number | Surface type | R (mm) | Th (mm) | Nd | Vd | SA (mm) | Conic |
|---|---|---|---|---|---|---|---|
| Object | Sphere | inf | inf | | | | |
| Stop | Sphere | inf | 0 | | | 2.11 | |
| LG11S1 | Sphere | 6.21 | 1.47 | 1.68 | 59.28 | 2.11 | |
| LG11S2 | Sphere | -45.00 | 1.25 | | | 1.98 | |
| LG12S1 | Asphere | -3.77 | 1.43 | 1.64 | 23.53 | 1.74 | |
| LG12S2 | Asphere | -6.94 | 0.15 | | | 1.79 | |
| LG13S1 | Asphere | 16.59 | 0.90 | 1.55 | 55.93 | 1.75 | |
| LG13S2 | Asphere | -8.29 | 1.14 | | | 1.70 | |
| LG21S1 | Asphere | 14.82 | 0.58 | 1.55 | 55.93 | 1.68 | |
| LG21S2 | Asphere | 2.86 | 1.09 | | | 1.63 | |
| LG22S1 | Asphere | 5.22 | 1.06 | 1.55 | 55.93 | 1.93 | |
| LG22S2 | Asphere | 9.50 | 4.85 | | | 2.09 | |
| L1S1 | Sphere | inf | 0.21 | 1.52 | 64.17 | 3 | |
| L1S2 | Sphere | inf | 1.372 | | | 3 | |
| Image | Sphere | inf | 0 | | | 2.5 | |

Refer to Table 4c. Table 4c shows basic parameters of the zoom lens in the macro state.

**Table 4c**

| Surface number | Surface type | R (mm) | Th (mm) | Nd | Vd | SA (mm) | Conic |
|---|---|---|---|---|---|---|---|
| Object | Sphere | inf | 43 | | | | |
| Stop | Sphere | inf | 0 | | | 2.11 | |
| LG11S1 | Sphere | 6.21 | 1.47 | 1.68 | 59.28 | 2.11 | |
| LG11S2 | Sphere | -45.00 | 1.25 | | | 1.98 | |
| LG12S1 | Asphere | -3.77 | 1.43 | 1.64 | 23.53 | 1.74 | |
| LG12S2 | Asphere | -6.94 | 0.15 | | | 1.79 | |
| LG13S1 | Asphere | 16.59 | 0.90 | 1.55 | 55.93 | 1.75 | |
| LG13S2 | Asphere | -8.29 | 3.52 | | | 1.70 | |
| LG21S1 | Asphere | 14.82 | 0.58 | 1.55 | 55.93 | 1.68 | |
| LG21S2 | Asphere | 2.86 | 1.09 | | | 1.63 | |
| LG22S1 | Asphere | 5.22 | 1.06 | 1.55 | 55.93 | 1.93 | |
| LG22S2 | Asphere | 9.50 | 2.47 | | | 2.09 | |
| L1S1 | Sphere | inf | 0.21 | 1.52 | 64.17 | 3 | |
| L1S2 | Sphere | inf | 1.372 | | | 3 | |
| Image | Sphere | inf | 0 | | | 2.5 | |

Refer to Table 4d. Table 4d shows parameters of the zoom lens. When the foregoing parameters are used in the lenses in the first lens group G1 and the second lens group G2, corresponding parameters of the zoom lens are shown in Table 4d.

**Table 4d**

| | |
|---|---|
| Macro magnification β | 0.3 |
| Infinity F# | 3.34 |
| EFLG1 | 8.03 |
| EFLG2 | -10.14 |
| Infinity EFL | 14.45 |
| \|EFLG1/EFLG2\| | 0.79 |
| \|EFLG2/EFL\| | 0.70 |
| Δ | 2.38 |
| Total track length TTL | 15.5 |
| Δ/TTL | 0.15 |

For ease of understanding a photographing effect provided in this embodiment of this application, the zoom lens shown in FIG. 25 is used as an example for simulation. For specific parameters of the zoom lens, refer to Table 4a, Table 4b, Table 4c, and Table 4d. A simulation effect of the zoom lens is described below in detail with reference to the accompanying drawings.

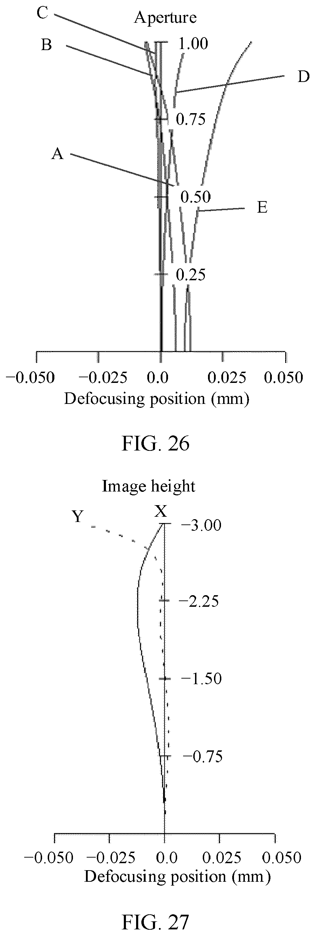

First, refer to FIG. 26. FIG. 26 shows a spherical aberration of the zoom lens in the telephoto state. For ease of giving an example, light of different frequencies is used as examples for simulation. Light of several frequencies that are commonly seen during imaging are shown in FIG. 26. For example, five solid curves in FIG. 26 represent light that has a wavelength of 650 nm, 587 nm, 546 nm, 486 nm, and 435 nm respectively. For ease of giving an example, in FIG. 26, A represents the light that has a wavelength of 650 nm, B represents the light that has a wavelength of 587 nm, C represents the light that has a wavelength of 546 nm, D represents the light that has a wavelength of 486 m, and E represents the light that has a wavelength of 435 nm. Refer to the five solid lines shown in FIG. 26. It can be learned that a defocusing amount of the light that has the wavelength is within a very small range from -0.01 mm to 0.05 mm. A problem of color unmixing can be avoided in an image photographed by the zoom lens, to obtain a good photographing effect.

Refer to FIG. 27. FIG. 27 shows astigmatism of the zoom lens in the telephoto state. In the diagram of astigmatism, a solid line represents a field curvature of light that has a center wavelength (555 nm) on a meridional image plane, and a dashed line represents a field curvature of light that has a center wavelength (555 nm) on a sagittal image plane. It can be seen from FIG. 27 that there is a sharply focused image in an entire field of view.

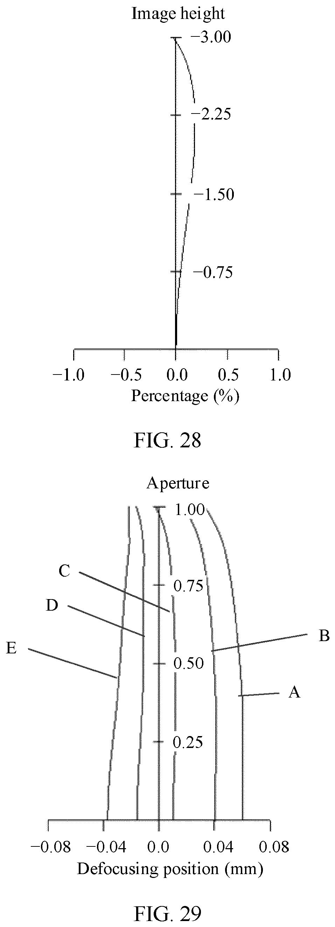

Refer to FIG. 28. FIG. 28 shows a distortion of the zoom lens in the telephoto state. A solid line in the diagram of the distortion represents a distortion value of light that has a center wavelength (555 nm) and that passes through the zoom lens. It can be learned from FIG. 28 that the distortion of the light is small, and is less than an image distortion threshold 2% that can be perceived by human eyes.

Refer to FIG. 29. FIG. 29 shows a spherical aberration of the zoom lens in the macro state. For ease of giving an example, light of different frequencies is used as examples for simulation. Light of several frequencies that are commonly seen during imaging are shown in FIG. 29. For example, five solid curves in FIG. 29 represent light that has a wavelength of 650 nm, 587 nm, 546 nm, 486 nm, and 435 nm respectively. For ease of giving an example, in FIG. 29, A represents the light that has a wavelength of 650 nm, B represents the light that has a wavelength of 587 nm, C represents the light that has a wavelength of 546 nm, D represents the light that has a wavelength of 486 m, and E represents the light that has a wavelength of 435 nm. Refer to the five solid lines shown in FIG. 29. It can be learned that a defocusing amount of the light that has the wavelength is within a very small range from -0.04 mm to 0.05 mm. A problem of color unmixing can be avoided in an image photographed by the zoom lens, to obtain a good photographing effect.

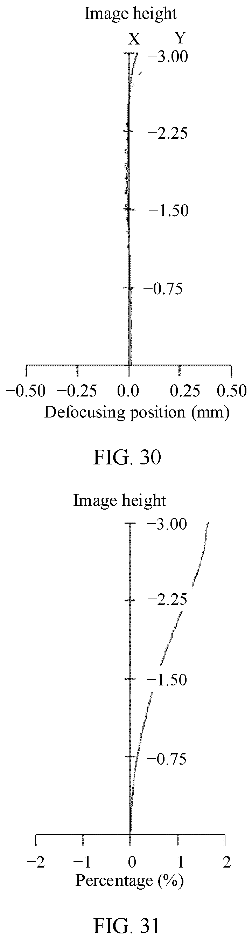

Refer to FIG. 30. FIG. 30 shows astigmatism of the zoom lens in the macro state. In the diagram of astigmatism, a solid line represents a field curvature of light that has a center wavelength (555 nm) on a meridional image plane, and a dashed line represents a field curvature of light that has a center wavelength (555 nm) on a sagittal image plane. It can be seen from FIG. 30 that there is a sharply focused image in an entire field of view.

Refer to FIG. 31. A solid line in FIG. 31 represents a distortion value of light that has a center wavelength (555 nm) and that passes through the zoom lens. It can be learned from FIG. 31 that the distortion of the light is small, and is less than an image distortion threshold 2% that can be perceived by human eyes.

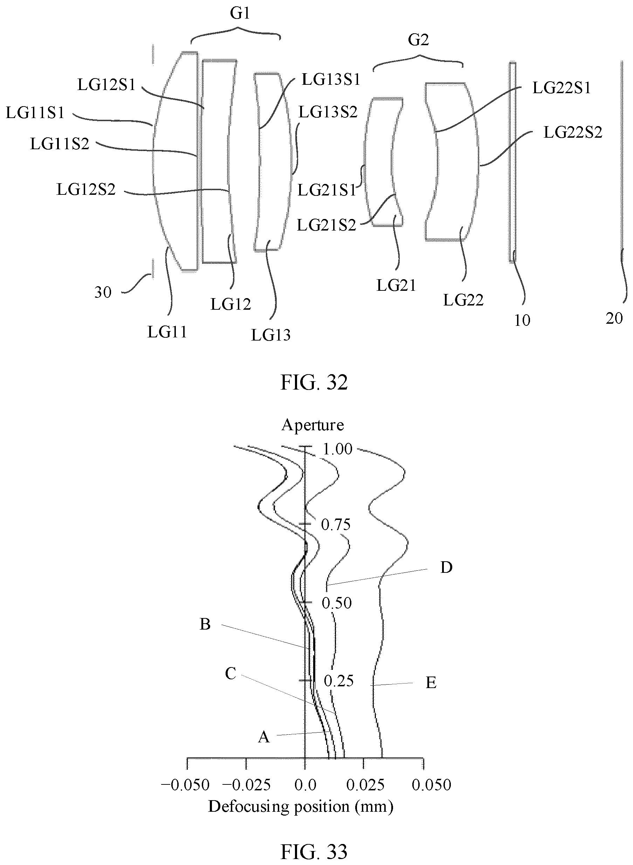

Refer to FIG. 32. FIG. 32 is a schematic diagram of a structure of a fifth type of zoom lens according to an embodiment of this application. From left to right, that is, from an object side to an image side, a zoom lens includes a first lens group G1 and a second lens group G2 that are sequentially arranged. The first lens group G1 includes three lenses, and the second lens group G2 includes two lenses. In this embodiment, the second lens group G2 performs focusing along a direction of an optical axis, and is applicable to a photographing scenario of an optical lens for macro photography and telephotography.

In an optional solution, a stop 30 may be further disposed in the zoom lens, and the stop 30 is on a side, of the first lens group, closer to the object side, to restrict light emitted into the first lens group G1.

In an optional solution, the zoom lens may further include an optical filter 10. For example, in a direction from the object side to the image side, the optical filter 10 configured to correct a color deviation or a plate glass L1 configured to protect an imaging photosensitive element is placed behind the second lens group G2. An imaging sensor 20 is located on an image plane. The imaging sensor 20 may be a CCD, or may be a CMOS.

In the zoom lens provided in this embodiment of this application, the first lens group G1 has a positive focal power, and the second lens group G2 has a negative focal power. For example, a focal length EFLG1 of the first lens group G1 is 8.03 mm, and a focal length EFLG2 of the second lens group G2 is -10.14 mm. A ratio of the focal length EFLG1 of the first lens group G1 to the focal length EFLG2 of the second lens group G2 is |EFLG1/EFLG2|=0.79, and a ratio of a focal length EFL of the second lens G2 to a focal length EFLG1 of the zoom lens is |EFLG2/EFL|=0.70.

The first lens group G1 includes a first lens LG11, a second lens LG12, and a third lens LG13. The first lens LG11 has a positive focal power, the second lens LG12 has a negative focal power, and the third lens LG13 has a positive focal power. In addition, a material of the first lens LG11 is optical glass, and is specifically an optical glass convex lens. The second lens group G2 includes a fourth lens LG21 and a fifth lens LG22. The fourth lens LG21 has a negative focal power, and the fifth lens LG22 may have a positive focal power, or may have a negative focal power. This is not specifically limited herein. Materials of the fourth lens LG21 and the fifth lens LG22 may be optical glass, or may be optical plastic. This is not specifically limited in this application.

If the focal length of the zoom lens is 14.45 mm, an aperture F# is 3.43, a total track length TTL is 15.5 mm, and a half a height of the image plane, that is, a half of an image height IH=2.5 mm. A horizontal magnification in the macro state satisfies β=0.3.

When the zoom lens changes from the telephoto state to the macro state, a moving distance △ of the second lens group G2 is 2.38 mm, and a ratio of the moving distance △ to the total track length is △/TTL=0.15. For ease of understanding of the zoom lens provided in this embodiment of this application, parameters of various lenses and the zoom lens are described in detail by using a specific table.

Meanings of reference signs in the table below are first described. LG11S1 refers to a surface, of the first lens LG11, facing the object side, and LG11S2 refers to a surface, of the first lens LG11, facing the image side; LG12S1 refers to a surface, of the second lens LG12, facing the object side, and LG12S2 refers to a surface, of the second lens LG12, facing the image side; LG13S1 refers to a surface, of the third lens LG13, facing the object side, and LG13S2 refers to a surface, of the third lens LG13, facing the image side; LG21S1 refers to a side, of the fourth lens LG21, facing the object side, and LG21S2 refers to a side, of the fourth lens LG21, facing the image side; and LG22S1 refers to a side, of the fifth lens LG22, facing the object side, and LG22S2 refers to a side, the fifth lens LG22, facing the image side.

First, refer to Table 5a. Table 5a shows aspheric coefficients of each aspheric lens. A4 to A30 are aspheric coefficients.

**Table 5a**

| LG12S1 | | LG12S2 | | LG13S1 | | LG13S2 | |
|---|---|---|---|---|---|---|---|
| A4 | -3.10E-03 | A4 | -2.96E-03 | A4 | -2.60E-03 | A4 | -1.12E-03 |
| A6 | 1.15E-03 | A6 | 1.15E-03 | A6 | -9.94E-05 | A6 | 2.02E-03 |
| A8 | -9.72E-04 | A8 | -1.42E-03 | A8 | -3.62E-04 | A8 | -3.33E-03 |
| A10 | 4.85E-04 | A10 | 9.08E-04 | A10 | 3.31E-04 | A10 | 2.88E-03 |
| A12 | -1.49E-04 | A12 | -3.40E-04 | A12 | -1.40E-04 | A12 | -1.45E-03 |
| A14 | 2.88E-05 | A14 | 7.70E-05 | A14 | 2.95E-05 | A14 | 4.44E-04 |
| A16 | -3.42E-06 | A16 | -1.03E-05 | A16 | -2.45E-06 | A16 | -8.05E-05 |
| A18 | 2.13E-07 | A18 | 7.39E-07 | A18 | -1.04E-07 | A18 | 7.97E-06 |
| A20 | -6.54E-09 | A20 | -3.65E-08 | A20 | 5.36E-09 | A20 | -3.46E-07 |
| A22 | | A22 | | A22 | | A22 | |

| LG21S1 | | LG21S2 | | LG22S1 | | LG22S2 | |
|---|---|---|---|---|---|---|---|
| A4 | 4.42E-03 | A4 | 4.54E-03 | A4 | 1.44E-03 | A4 | -2.30E-03 |
| A6 | -1.05E-03 | A6 | 1.06E-03 | A6 | -1.85E-02 | A6 | -2.52E-03 |
| A8 | -5.74E-04 | A8 | 1.26E-03 | A8 | 3.22E-02 | A8 | 2.69E-03 |
| A10 | 4.76E-03 | A10 | -4.64E-03 | A10 | -3.5 1E-02 | A10 | -1.80E-03 |
| A12 | -6.74E-03 | A12 | 7.07E-03 | A12 | 2.39E-02 | A12 | 7.23E-04 |
| A14 | 4.75E-03 | A14 | -5.88E-03 | A14 | -1.01E-02 | A14 | -1.78E-04 |
| A16 | -1.84E-03 | A16 | 2.80E-03 | A16 | 2.52E-03 | A16 | 2.53E-05 |
| A18 | 3.75E-04 | A18 | -7.21E-04 | A18 | -2.96E-04 | A18 | -1.73E-06 |
| A20 | -3.15E-05 | A20 | | A20 | -8.69E-07 | A20 | 3.44E-09 |
| A22 | | A22 | | A22 | 2.52E-06 | A22 | 4.08E-09 |

In this embodiment, all aspheric surface types may be limited by, but not limited to, the following aspheric surface formula: $z = \frac{{cr}^{2}}{1 + \sqrt{1 - {Kc}^{2} {r}^{2}}} + {A}_{2} {r}^{2} + {A}_{4} {r}^{4} + {A}_{6} {r}^{6} + {A}_{8} {r}^{8} + {A}_{10} {r}^{10} + {A}_{12} {r}^{12}$

z is a sag of an aspheric surface, r is a radial coordinate of the aspheric surface, c is a spherical curvature at a vertex of the aspheric surface, K is a conic constant, and A2, A4, A6, A8, A10, and A12 are aspheric coefficients.

Refer to Table 5b. Table 5b shows basic parameters of the zoom lens in the telephoto state.

**Table 5b**

| Surface number | Surface type | R (mm) | Th (mm) | Nd | Vd | SA (mm) | Conic |
|---|---|---|---|---|---|---|---|
| Object | Sphere | inf | inf | | | | |
| Stop | Sphere | inf | 0 | | | 2.70 | |
| LG11S1 | Sphere | 4.66 | 1.67 | 1.68 | 59.28 | 2.74 | |
| LG11S2 | Sphere | -241.10 | 0.10 | | | 2.60 | |
| LG12S1 | Asphere | 20.63 | 1.00 | 1.64 | 23.53 | 2.55 | |
| LG12S2 | Asphere | 8.82 | 1.18 | | | 2.37 | |
| LG13S1 | Asphere | -23.86 | 1.17 | 1.55 | 55.93 | 2.23 | |
| LG13S2 | Asphere | -6.69 | 1.00 | | | 2.22 | |
| LG21S1 | Asphere | 5.83 | 1.01 | 1.55 | 55.93 | 1.60 | |
| LG21S2 | Asphere | 3.44 | 1.68 | | | 1.46 | |
| LG22S1 | Asphere | -3.71 | 1.50 | 1.55 | 55.93 | 1.57 | |
| LG22S2 | Asphere | -5.88 | 1.15 | | | 1.97 | |
| L1S1 | Sphere | inf | 0.21 | 1.52 | 64.17 | 3 | |
| L1S2 | Sphere | inf | 3.94 | | | 3 | |
| Image | Sphere | inf | 0 | | | 2.5 | |

Refer to Table 5c. Table 5c shows basic parameters of the zoom lens in the macro state.

**Table 5c**

| Surface number | Surface type | R (mm) | Th (mm) | Nd | Vd | SA (mm) | Conic |
|---|---|---|---|---|---|---|---|
| Object | Sphere | inf | 63.03 | | | | |
| Stop | Sphere | inf | 0 | | | 2.70 | |
| LG11S1 | Sphere | 4.66 | 1.67 | 1.68 | 59.28 | 2.74 | |
| LG11S2 | Sphere | -241.10 | 0.10 | | | 2.60 | |
| LG12S1 | Asphere | 20.63 | 1.00 | 1.64 | 23.53 | 2.55 | |
| LG12S2 | Asphere | 8.82 | 1.18 | | | 2.37 | |
| LG13S1 | Asphere | -23.86 | 1.17 | 1.55 | 55.93 | 2.23 | |
| LG13S2 | Asphere | -6.69 | 2.68 | | | 2.22 | |
| LG21S1 | Asphere | 5.83 | 1.01 | 1.55 | 55.93 | 1.60 | |
| LG21S2 | Asphere | 3.44 | 1.68 | | | 1.46 | |
| LG22S1 | Asphere | -3.71 | 1.50 | 1.55 | 55.93 | 1.57 | |
| LG22S2 | Asphere | -5.88 | 1.15 | | | 1.97 | |
| L1S1 | Sphere | inf | 0.21 | 1.52 | 64.17 | 3 | |
| L1S2 | Sphere | inf | 3.94 | | | 3 | |
| Image | Sphere | inf | 0 | | | 2.5 | |

Refer to Table 5d. Table 5d shows parameters of the zoom lens. When the foregoing parameters are used in the lenses in the first lens group G1 and the second lens group G2, corresponding parameters of the zoom lens are shown in Table 5d.

**Table 5d**

| | |
|---|---|
| Macro magnification β | 0.3 |
| Infinity F# | 3 |
| EFLG1 | 9.6 |
| EFLG2 | -10.77 |
| Infinity EFL | 16.5 |
| \|EFLG1/EFLG2\| | 0.89 |
| \|EFLG2/EFL\| | 0.65 |
| Δ | 1.68 |
| Total track length TTL | 17.3 |
| Δ/TTL | 0.10 |

For ease of understanding a photographing effect provided in this embodiment of this application, the zoom lens shown in FIG. 32 is used as an example for simulation. For specific parameters of the zoom lens, refer to Table 5a, Table 5b, Table 5c, and Table 5d. A simulation effect of the zoom lens is described below in detail with reference to the accompanying drawings.

First, refer to FIG. 33. FIG. 33 shows a spherical aberration of the zoom lens in the telephoto state. For ease of giving an example, light of different frequencies is used as examples for simulation. Light of several frequencies that are commonly seen during imaging are shown in FIG. 33. For example, five solid curves in FIG. 33 represent light that has a wavelength of 650 nm, 587 nm, 546 nm, 486 nm, and 435 nm respectively. For ease of giving an example, in FIG. 33, A represents the light that has a wavelength of 650 nm, B represents the light that has a wavelength of 587 nm, C represents the light that has a wavelength of 546 nm, D represents the light that has a wavelength of 486 m, and E represents the light that has a wavelength of 435 nm. Refer to the five solid lines shown in FIG. 33. It can be learned that a defocusing amount of the light that has the wavelength is within a very small range from -0.03 mm to 0.05 mm. A problem of color unmixing can be avoided in an image photographed by the zoom lens, to obtain a good photographing effect.

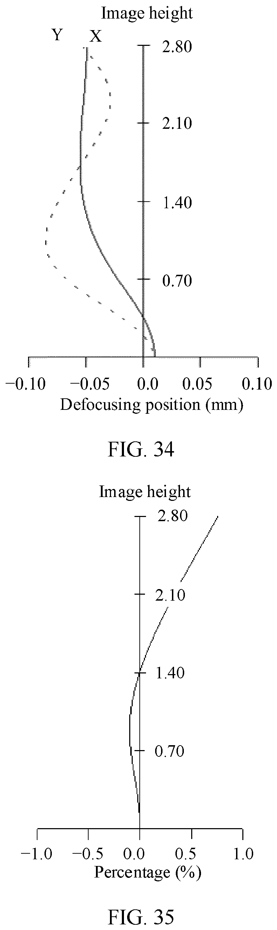

Refer to FIG. 34. FIG. 34 shows astigmatism of the zoom lens in the telephoto state. In the diagram of astigmatism, a solid line represents a field curvature of light that has a center wavelength (555 nm) on a meridional image plane, and a dashed line represents a field curvature of light that has a center wavelength (555 nm) on a sagittal image plane. It can be seen from FIG. 34 that there is a sharply focused image in an entire field of view.

Refer to FIG. 35. FIG. 35 shows a distortion of the zoom lens in the telephoto state. A solid line in the diagram of the distortion represents a distortion value of light that has a center wavelength (555 nm) and that passes through the zoom lens. It can be learned from FIG. 35 that the distortion of the light is small, and is less than an image distortion threshold 2% that can be perceived by human eyes.

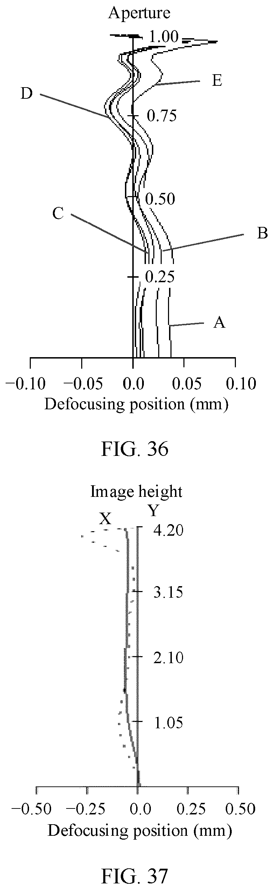

Refer to FIG. 36. FIG. 36 shows a spherical aberration of the zoom lens in the macro state. For ease of giving an example, light of different frequencies is used as examples for simulation. Light of several frequencies that are commonly seen during imaging are shown in FIG. 36. For example, five solid curves in FIG. 36 represent light that has a wavelength of 650 nm, 587 nm, 546 nm, 486 nm, and 435 nm respectively. For ease of giving an example, in FIG. 36, A represents the light that has a wavelength of 650 nm, B represents the light that has a wavelength of 587 nm, C represents the light that has a wavelength of 546 nm, D represents the light that has a wavelength of 486 m, and E represents the light that has a wavelength of 435 nm. Refer to the five solid lines shown in FIG. 36. It can be learned that a defocusing amount of the light that has the wavelength is within a very small range from -0.04 mm to 0.1 mm. A problem of color unmixing can be avoided in an image photographed by the zoom lens, to obtain a good photographing effect.

Refer to FIG. 37. FIG. 37 shows astigmatism of the zoom lens in the macro state. In the diagram of astigmatism, a solid line represents a field curvature of light that has a center wavelength (555 nm) on a meridional image plane, and a dashed line represents a field curvature of light that has a center wavelength (555 nm) on a sagittal image plane. It can be seen from FIG. 37 that there is a sharply focused image in an entire field of view.

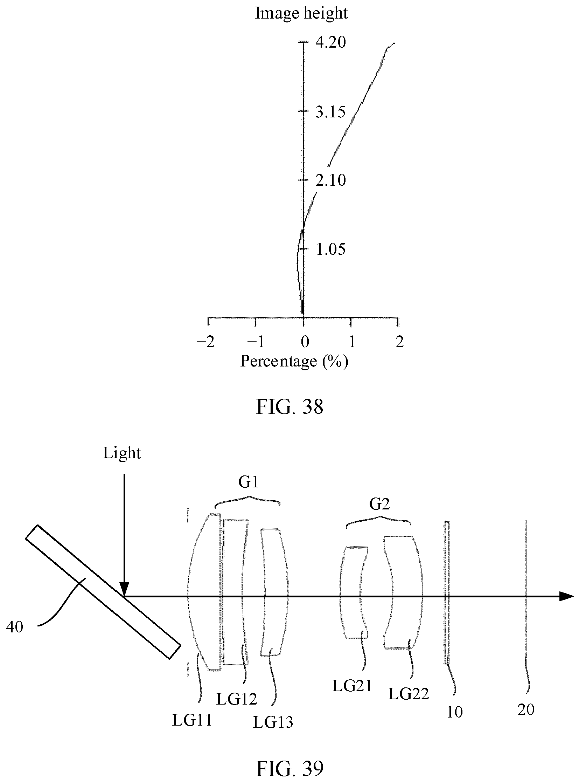

Refer to FIG. 38. A solid line in FIG. 38 represents a distortion value of light that has a center wavelength (555 nm) and that passes through the zoom lens. It can be learned from FIG. 31 that the distortion of the light is small, and is less than an image distortion threshold 2% that can be perceived by human eyes.

FIG. 39 shows another zoom lens according to an embodiment of this application. The zoom lens further includes a mirror 40. The mirror 40 is located at a position, on a first lens group G1, close to an object side, and is configured to reflect light to the first lens group G1, so that periscope photography can be implemented, and room for placing the lens is improved. Clearly, in addition to the mirror, a prism may be further used. The prism is disposed on the object side of the first lens group G1, and may also reflect light to the first lens group G1, so that a same effect can be achieved.

It can be learned from the foregoing specific embodiment that, the zoom lens provided in this embodiment of this application may introduce a focusing manner of using the second lens group according to a technical solution of combining the first lens group and the second lens group, so that the zoom lens is applicable to a photographing scenario of telephotography and macro photography, and satisfy a requirement of a compact structure of an optical system, thereby improving a photographing effect of a mobile terminal.

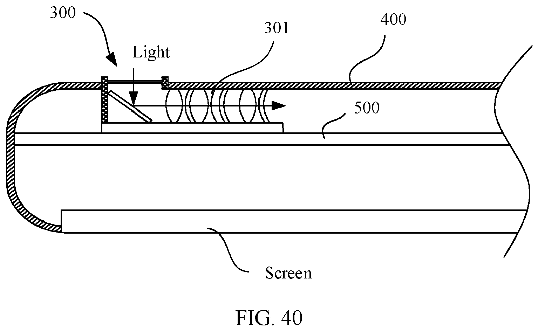

FIG. 40 shows a scenario in which a zoom lens is used in a mobile phone. When a zoom lens 300 is a periscope type, a direction in which a lens group 301 of the zoom lens 300 is arranged may be parallel to a length direction of a housing 400 of the mobile phone. The lens group 301 is disposed between the housing 400 of the mobile phone and a midframe 500. It should be understood that FIG. 40 shows only an example of a position and a manner of disposing the lens group 301, and the lens group 301 in FIG. 40 does not indicate an actual quantity of lenses in the lens group 301. It can be learned from FIG. 40 that when the zoom lens is the periscope type, impact on a thickness of the mobile phone can be reduced.

An embodiment of this application further provides a camera module, and provides a camera module. The camera module includes a photosensitive element and the zoom lens according to any one of the foregoing embodiments, where the photosensitive element is on an image side of the zoom lens, the zoom lens is configured to receive light reflected by a photographed object and project the light to the photosensitive element, and the photosensitive element is configured to convert the light into an image signal. In the foregoing technical solution, a technical solution of combining two lens groups is used and is applicable to a photographing scenario of telephotography and macro photography. Compared with an existing lens that can be used for both telephotography and macro photography, a miniaturization requirement is implemented, and higher resolution and better aberration control are achieved.

This application provides a mobile terminal. The mobile terminal may be a mobile phone, a tablet computer, a laptop computer, or the like. The mobile terminal includes a housing and a zoom lens according to any one of the foregoing embodiments that is disposed in the housing. The zoom lens of the periscope style shown in FIG. 40 is disposed in the mobile phone. Further refer to the zoom lens shown in FIG. 32. For the zoom lens, a technical solution of combining two lens groups is used and is applicable to a photographing scenario of telephotography and macro photography. Compared with an existing lens that can be used for both telephotography and macro photography, a miniaturization requirement is implemented, and higher resolution and better aberration control are achieved.

Clearly, a person skilled in the art may make various changes and variations to this application without departing from the scope of the claims. This application is intended to cover these modifications and variations to this application provided that the modifications and variations fall within the scope of protection defined by the claims of this application.

## Claims

1. A zoom lens, comprising multiple lens groups, wherein the number of lens groups equals to two; the two lens groups comprise a first lens group (G1) and a second lens group (G2) that are arranged from an object side to an image side, wherein the first lens group (G1) is fixed, and the second lens group (G2) is capable of sliding along a direction of an optical axis;
the first lens group (G1) has a positive focal power;
the second lens group (G2) has a negative focal power;
a ratio of a focal length EFLG1 of the first lens group (G1) to a focal length EFLG2 of the second lens group (G2) satisfies 0.4<|EFLG1/EFLG2|<1.22; and
a ratio of the focal length EFLG2 of the second lens group (G2) to a focal length EFL of the optical lens satisfies 0.4<|EFLG2/EFL|<1;
wherein in a process in which the zoom lens changes from a telephoto state to a macro state, the second lens group (G2) moves from the object side to the image side, and a ratio of a moving distance △ of the second lens group (G2) to a total track length TTL of the zoom lens satisfies Δ/TTL<0.4.

2. The zoom lens according to claim 1, wherein the first lens group (G1) comprises at least one lens, and a lens that is in the first lens group (G1) and that is closest to the object side has a positive focal power.

3. The zoom lens according to claim 2, wherein the lens that is in the first lens group (G1) and that is closest to the object side is a lens made of optical glass.

4. The zoom lens according to claim 2 or 3, wherein the first lens group (G1) comprises a first lens and a second lens that are arranged from the object side to the image side, and the second lens has a negative focal power.

5. The zoom lens according to claim 1, wherein the moving distance △ of the second lens group (G2) is less than 4 mm.

6. The zoom lens according to any one of claims 1 to 5, wherein the second lens group (G2) comprises at least one lens; and
a surface, facing the image side, of a lens that is in the second lens group (G2) and that is closest to the object side is a concave surface.

7. The zoom lens according to any one of claims 1 to 6, wherein an aperture of the zoom lens satisfies 2.8>F#.

8. The zoom lens according to any one of claims 1 to 7, wherein in the telephoto state, the second lens group moves to be close to the object side, and a focusing distance ODt of the zoom lens satisfies the following formula:$1 m < ODt < ∞ .$

9. The zoom lens according to any one of claims 1 to 8, wherein in the macro state, the second lens group moves to be close to the image side, and a focusing distance Odm of the zoom lens satisfies the following formula:$0.03 m < ODm < 0.2 m .$

10. The zoom lens according to any one of claims 1 to 8, wherein a macro horizontal magnification of the zoom lens satisfies 0.3<β<0.7.

11. A camera module, comprising a photosensitive element and the zoom lens according to any one of claims 1 to 10, wherein the photosensitive element is on an image side of the zoom lens, the zoom lens is configured to receive light reflected by a photographed object and project the light to the photosensitive element, and the photosensitive element is configured to convert the light into an image signal.

12. A mobile terminal, comprising a housing and the zoom lens according to any one of claims 1 to 10 that is disposed in the housing.

## Patentansprüche

1. Zoomobjektiv, das mehrere Objektivgruppen umfasst, wobei die Anzahl von Objektivgruppen gleich zwei ist; die zwei Objektivgruppen eine erste Objektivgruppe (G1) und eine zweite Objektivgruppe (G2), die von einer Objektseite zu einer Bildseite angeordnet sind, umfassen, wobei die erste Objektivgruppe (G1) fest ist und die zweite Objektivgruppe (G2) in der Lage ist, entlang einer Richtung einer optischen Achse zu gleiten;
die erste Objektivgruppe (G1) eine positive Brechkraft aufweist;
die zweite Objektivgruppe (G2) eine negative Brechkraft aufweist;
ein Verhältnis einer Brennweite EFLG1 der ersten Objektivgruppe (G1) zu einer
Brennweite EFLG2 der zweiten Objektivgruppe (G2) 0,4<|EFLG1/EFLG2|<1,22 erfüllt; und
ein Verhältnis der Brennweite EFLG2 der zweiten Objektivgruppe (G2) zu einer Brennweite EFL der optischen Linse 0,4<|EFLG2/EFL|<1 erfüllt;
wobei in einem Prozess, in dem das Zoomobjektiv von einem Telezustand zu einem Makrozustand wechselt, sich die zweite Objektivgruppe (G2) von der Objektseite zu der Bildseite bewegt, und ein Verhältnis einer Bewegungsdistanz △ der zweiten Objektivgruppe (G2) zu einer Gesamtbahnlänge TTL des Zoomobjektivs Δ/TTL<0,4 erfüllt.

2. Zoomobjektiv nach Anspruch 1, wobei die erste Objektivgruppe (G1) mindestens ein Objektiv umfasst, und ein Objektiv, das in der ersten Objektivgruppe (G1) ist und das der Objektseite am nächsten ist, eine positive Brechkraft aufweist.

3. Zoomobjektiv nach Anspruch 2, wobei das Objektiv, das in der ersten Objektivgruppe (G1) ist und das der Objektseite am nächsten ist, ein Objektiv ist, das aus optischem Glas hergestellt ist.

4. Zoomobjektiv nach Anspruch 2 oder 3, wobei die erste Objektivgruppe (G1) ein erstes Objektiv und ein zweites Objektiv, die von der Objektseite zu der Bildseite angeordnet sind, umfasst, und das zweite Objektiv eine negative Brechkraft aufweist.

5. Zoomobjektiv nach Anspruch 1, wobei die Bewegungsdistanz △ der zweiten Objektivgruppe (G2) weniger als 4 mm beträgt.

6. Zoomobjektiv nach einem der Ansprüche 1 bis 5, wobei die zweite Objektivgruppe (G2) mindestens ein Objektiv umfasst; und
eine Oberfläche, die der Bildseite zugewandt ist, eines Objektivs, das in der zweiten Objektivgruppe (G2) ist und das der Objektseite am nächsten ist, eine konkave Oberfläche ist.

7. Zoomobjektiv nach einem der Ansprüche 1 bis 6, wobei eine Blende des Zoomobjektivs 2,8>F# erfüllt.

8. Zoomobjektiv nach einem der Ansprüche 1 bis 7, wobei in dem Telezustand die zweite Objektivgruppe sich bewegt, um nah an der Objektseite zu sein, und eine Fokussierdistanz ODt des Zoomobjektivs die folgende Formel erfüllt:$1 m < ODt < ∞ .$

9. Zoomobjektiv nach einem der Ansprüche 1 bis 8, wobei in dem Makrozustand die zweite Objektivgruppe sich bewegt, um nah an der Bildseite zu sein, und eine Fokussierdistanz Odm des Zoomobjektivs die folgende Formel erfüllt:$0 , 03 m < Odm < 0 , 2 m .$

10. Zoomobjektiv nach einem der Ansprüche 1 bis 8, wobei eine horizontale Makrovergrößerung des Zoomobjektivs 0,3<β<0,7 erfüllt.

11. Kameramodul, das ein lichtempfindliches Element und das Zoomobjektiv nach einem der Ansprüche 1 bis 10 umfasst, wobei das lichtempfindliche Element auf einer Bildseite des Zoomobjektivs ist, das Zoomobjektiv konfiguriert ist, um Licht, das durch ein fotografiertes Objekt reflektiert wird, aufzunehmen und das Licht auf das lichtempfindliche Element zu projizieren, und das lichtempfindliche Element konfiguriert ist, um das Licht in ein Bildsignal umzuwandeln.

12. Mobiles Endgerät, das ein Gehäuse und das Zoomobjektiv nach einem der Ansprüche 1 bis 10, das in dem Gehäuse eingerichtet ist, umfasst.

## Revendications

1. Objectif zoom, comprenant plusieurs groupes d'objectifs, dans lequel le nombre de groupes d'objectifs est égal à deux ; les deux groupes d'objectifs comprennent un premier groupe d'objectifs (G1) et un second groupe d'objectifs (G2) qui sont disposés d'un côté objet à un côté image, dans lequel le premier groupe d'objectifs (G1) est fixe et le second groupe d'objectifs (G2) peut glisser le long d'une direction d'un axe optique ;
le premier groupe d'objectifs (G1) a une puissance focale positive ;
le second groupe d'objectifs (G2) a une puissance focale négative ;
un rapport entre une longueur focale EFLG1 du premier groupe d'objectifs (G1) et une longueur focale EFLG2 du second groupe d'objectifs (G2) satisfait 0,4 < |EFLG1/EFLG2| < 1,22 ; et
un rapport de la longueur focale EFLG2 du second groupe d'objectifs (G2) à une longueur focale EFL de l'objectif optique satisfait 0,4 < |EFLG2/EFL| < 1 ;
dans lequel, dans un processus dans lequel l'objectif zoom passe d'un état de téléobjectif à un état macro, le second groupe d'objectifs (G2) se déplace du côté objet vers le côté image, et un rapport entre une distance de déplacement △ du second groupe d'objectifs (G2) et une longueur totale de piste TTL de l'objectif zoom satisfait Δ/TTL < 0,4.

2. Objectif zoom selon la revendication 1, dans lequel le premier groupe d'objectifs (G1) comprend au moins un objectif, et un objectif qui se trouve dans le premier groupe d'objectifs (G1) et qui est le plus proche du côté objet a une puissance focale positive.

3. Objectif zoom selon la revendication 2, dans lequel l'objectif qui est dans le premier groupe d'objectifs (G1) et qui est le plus proche du côté objet est un objectif fait de verre optique.

4. Objectif zoom selon la revendication 2 ou 3, dans lequel le premier groupe d'objectifs (G1) comprend un premier objectif et un second objectif qui sont agencés du côté objet vers le côté image, et le second objectif a une puissance focale négative.

5. Objectif zoom selon la revendication 1, dans lequel la distance de déplacement △ du second groupe d'objectifs (G2) est inférieure à 4 mm.

6. Objectif zoom selon l'une quelconque des revendications 1 à 5, dans lequel le second groupe d'objectifs (G2) comprend au moins un objectif ; et
une surface, tournée vers le côté image, d'un objectif qui est dans le second groupe d'objectifs (G2) et qui est le plus proche du côté objet est une surface concave.

7. Objectif zoom selon l'une quelconque des revendications 1 à 6, dans lequel une ouverture de l'objectif zoom satisfait 2,8 > F#.

8. Objectif zoom selon l'une quelconque des revendications 1 à 7, dans lequel, dans l'état de téléobjectif, le second groupe d'objectifs se déplace pour être proche du côté objet, et une distance de mise au point ODt de l'objectif zoom satisfait la formule suivante :$1 m < ODt < ∞ .$

9. Objectif zoom selon l'une quelconque des revendications 1 à 8, dans lequel, dans l'état macro, le second groupe d'objectifs se déplace pour être proche du côté de l'image, et une distance de mise au point Odm de l'objectif zoom satisfait la formule suivante :$0 , 03 < Odm < 0 , 2 m .$

10. Objectif zoom selon l'une quelconque des revendications 1 à 8, dans lequel un grossissement horizontal macro de l'objectif zoom satisfait 0,3 < β < 0,7.

11. Module de caméra, comprenant un élément photosensible et l'objectif zoom selon l'une quelconque des revendications 1 à 10, dans lequel l'élément photosensible est sur un côté image de l'objectif zoom, l'objectif zoom est configuré pour recevoir la lumière réfléchie par un objet photographié et projeter la lumière vers l'élément photosensible, et l'élément photosensible est configuré pour convertir la lumière en un signal d'image.

12. Terminal mobile comprenant un boîtier et l'objectif zoom selon l'une quelconque des revendications 1 à 10 qui est disposé dans le boîtier.
